# EUROPEAN PATENT SPECIFICATION

(11) **EP 4 401 393 B1**
(45) Date of publication and mention of the grant of the patent: **17.06.2026**
(21) Application number: 23843966.5
(22) Date of filing: 29.11.2023
(51) Int. Cl.: H04M 1/72454, H04M 1/02, H04M 1/60

(54) **METHOD FOR EXECUTING SPECIFIED FUNCTION DURING CALL ON ELECTRONIC DEVICE, AND ELECTRONIC DEVICE SUPPORTING SAME**
VERFAHREN ZUR AUSFÜHRUNG EINER SPEZIFISCHEN FUNKTION WÄHREND EINES ANRUFS AUF EINER ELEKTRONISCHEN VORRICHTUNG UND ELEKTRONISCHE VORRICHTUNG ZUR UNTERSTÜTZUNG DAVON
PROCÉDÉ D'EXÉCUTION DE FONCTION SPÉCIFIÉE PENDANT UN APPEL SUR UN DISPOSITIF ÉLECTRONIQUE, ET DISPOSITIF ÉLECTRONIQUE LE PRENANT EN CHARGE

(30) Priority: 29.11.2022 KR 20220163093; 23.12.2022 KR 20220182848
(43) Date of publication of application: 17.07.2024
(73) Proprietor: Samsung Electronics Co., Ltd., Suwon-si, Gyeonggi-do 16677 (KR)
(72) Inventor: CHOI, Changmin, Suwon-si Gyeonggi-do 16677 (KR); HAN, Yonggil, Suwon-si Gyeonggi-do 16677 (KR); LEE, Youngdae, Suwon-si Gyeonggi-do 16677 (KR)
(74) Representative: HGF
(86) International application number: PCT/KR2023/019479
(87) International publication number: WO 2024/117785

(56) References cited:
- WO-A1-2020/177638
- WO-A1-2022/119115
- KR-A- 20150 026 537
- KR-A- 20180 089 229
- KR-A- 20210 022 302
- KR-A- 20210 086 267
- US-A1- 2004 235 539
- US-A1- 2023 236 639

## Description

### [Technical Field]

An embodiment of the disclosure provides a method of reducing noise that may occur during a call in a foldable electronic device and an electronic device supporting the method.

### [Background Art]

With the development of digital technology, various types of electronic devices such as smartphones, digital cameras, and/or wearable devices are widely used. In order to support and increase functions of these electronic devices, hardware parts and/or software parts of electronic devices are continuously being developed.

Recently, electronic devices may have a new form factor such as a multi-display (e.g., a dual display) device (e.g., a foldable device). That is, electronic devices may comprise foldable devices, and these foldable devices may comprise two or more displays. The foldable device is equipped with a foldable (or bendable) display (e.g., a foldable display or a flexible display) and may be used while being in a folded or an unfolded state. For example, the foldable device may support a user's call (e.g., a voice call or a video call) in an unfolded or a folded state.

WO 2022/119115 A1 discusses an electronic apparatus which comprises a first housing and a second housing connected to at least a portion of the first housing and capable of moving relative to the first housing.

### [Disclosure]

### [Technical Problem]

An embodiment of the disclosure provides a method capable of reducing noise that may occur due to a folding operation during a call in a foldable electronic device and an electronic device supporting the same.

A user of a foldable electronic device may have a call, such as a video call or a voice call, with a user of a second electronic device while the foldable electronic device is in an unfolded (or open) state. At the end of the call, the user of the foldable electronic device may fold the electronic device into a folded (or closed) state in order to end the call. The sound of the foldable electronic device closing may be audible to the user of the second electronic device if the call has not ended before the foldable electronic device closes. For example, a sound may be produced by two portions of the foldable electronic device, each portion either side of a hinge or other folding or bending mechanism, coming into contact as the foldable electronic device closes. This sound may be detected by the microphone of the foldable electronic device and, if the second electronic device and the foldable electronic device are still connected at the time that the sound is produced, the sound may be transmitted to the second electronic device where it may be heard by the user of the second electronic device. The transmitted sound may be heard by the user of the second electronic device as a loud snapping or banging noise, which may be unpleasant or painful to the user of the second electronic device.

An embodiment of the disclosure provides a method of recognizing a user's folding operation during a call and blocking noise transmitted to the other party in advance through a mute or noise canceling process before the call ends, thereby improving the call quality, and an electronic device supporting the same.

Advantageously, this prevents the transmission of (or reduces a volume of, or changes a property of) a sound caused by the foldable electronic device closing to the user of the second electronic device. This improves the comfort and protects the hearing of the user of the second electronic device.

The technical problems to be solved in this document are not limited to the above-mentioned technical problems, and other technical problems not mentioned above will become clearly understood by those skilled in the art to which the disclosure pertains from the description below.

### [Technical Solution]

The invention is set out in the appended set of claims.

### [Advantageous Effects]

According to an electronic device, an operation method thereof, and a recording medium according to an embodiment of the disclosure, a closing angle and an angular velocity of a housing of the electronic device may be identified during a call with a second electronic device in the state in which the electronic device is unfolded, thereby preventing a noise sound (e.g., a frictional sound (e.g., a "snap" sound) between housings when switching to a folded state) of noise (e.g., noise data coming from a microphone when switching to a folded state) from being transmitted as a call sound. That is, in response to monitoring a closing angle and an angular velocity of a housing of a foldable electronic device during a call with a second electronic device, and determining from the monitoring that the foldable electronic device may close (that is, two housing portions separated by a folding means may contact each other), the foldable electronic device can perform a function to prevent the transmission of, or lower the volume of, a noise sound which results when the housing portions contact one another to the second electronic device.

**In** addition, various effects identified directly or indirectly through this document may be provided. The effects obtainable from the disclosure are not limited to the effects mentioned above, and other effects not mentioned above may be clearly understood by those skilled in the art to which the disclosure pertains from the description below.

### [Description of Drawings]

**In** connection with a description of the drawings, the same or similar reference numerals may be used for the same or similar elements.
FIG. 1 is a block diagram illustrating an example electronic device in a network environment according to various embodiments.
FIG. 2 is a perspective view illustrating the front face of an electronic device in an unfolded state according to an embodiment of the disclosure.
FIG. 3 is a plan view illustrating a front surface of an electronic device in an unfolded state according to an embodiment of the disclosure.
FIG. 4 is a plan view illustrating a rear surface of an electronic device in an unfolded state according to an embodiment of the disclosure.
FIG. 5 is a perspective view of an electronic device in a folded state according to an embodiment of the disclosure.
FIG. 6 is a perspective view of an electronic device in an intermediate state according to an embodiment of the disclosure.
FIG. 7 is a diagram illustrating an example of an electronic device according to an embodiment of the disclosure.
FIG. 8 is a diagram schematically illustrating the configuration of an electronic device according to an embodiment of the disclosure.
FIG. 9 is a flowchart illustrating an operation method of an electronic device according to an embodiment of the disclosure.
FIG. 10 is a flowchart illustrating an operation method of an electronic device according to an embodiment of the disclosure.
FIG. 11 is a flowchart illustrating an operation method of an electronic device according to an embodiment of the disclosure.
FIG. 12 is a flowchart illustrating an operation method of an electronic device according to an embodiment of the disclosure.
FIG. 13 is a diagram illustrating an example of a user interface supported by an electronic device according to an embodiment of the disclosure.
FIG. 14 is a diagram illustrating an example of a user interface supported by an electronic device according to an embodiment of the disclosure.

### [Mode for Invention]

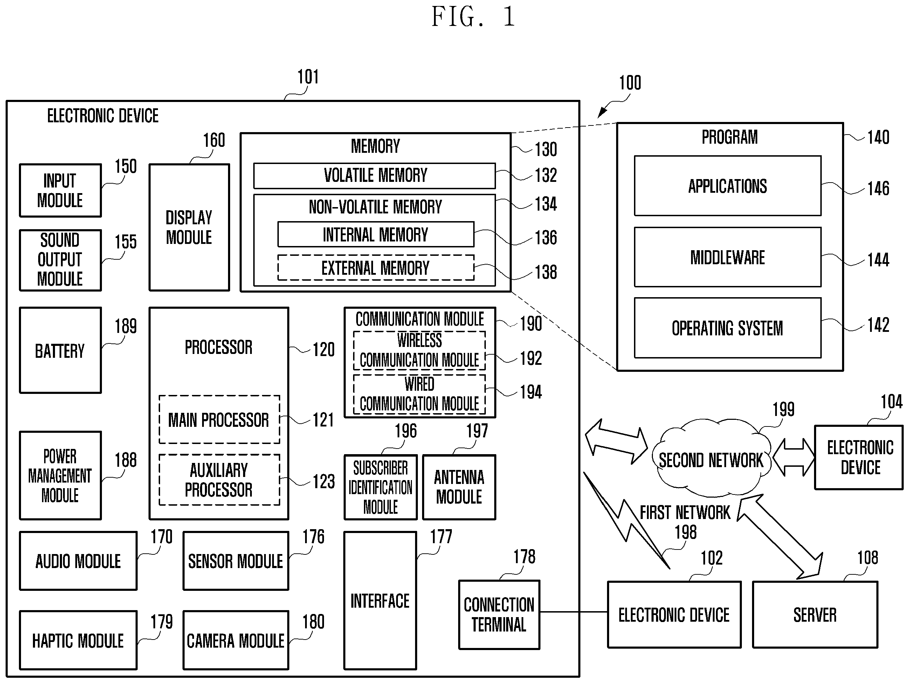

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the disclosure and the terms used therein are not intended to limit the technological features set forth herein to particular embodiments and include various changes or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Prior to describing various embodiments of the disclosure, an electronic device 101 to which embodiments of the disclosure are able to be applied will be described. The electronic device 101 may be referred to as a foldable electronic device.

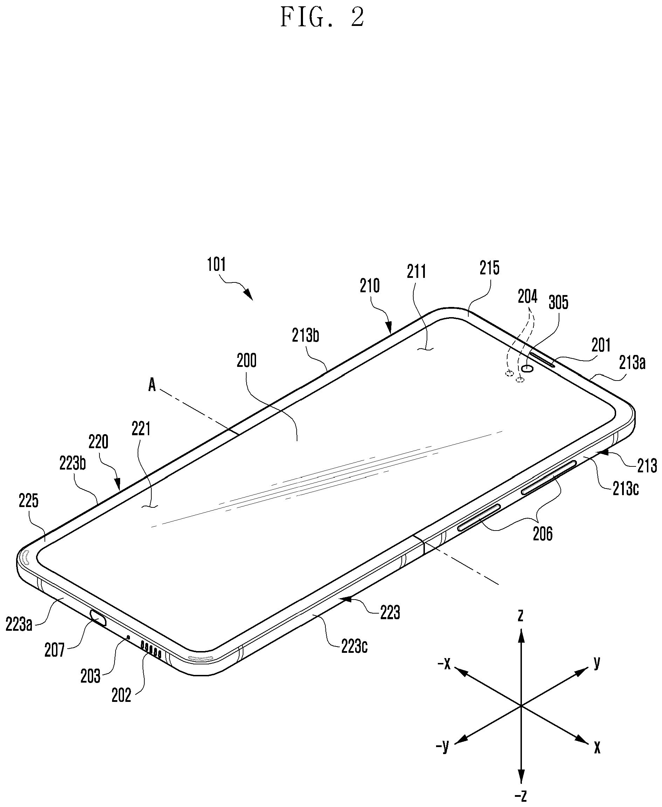

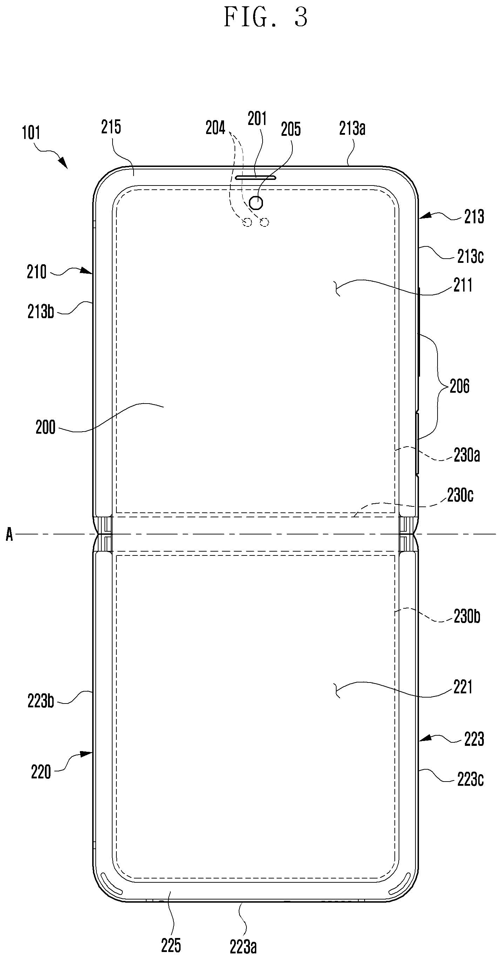

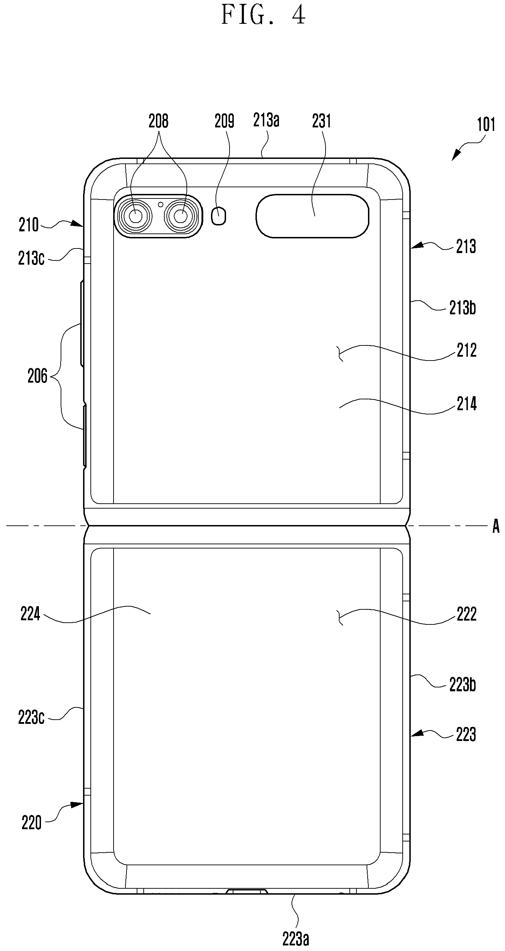

FIG. 2 is a perspective view of an electronic device in an unfolded state (or flat state) according to an embodiment of the disclosure. FIG. 3 is a plan view illustrating a front surface of an electronic device in an unfolded state according to an embodiment of the disclosure. FIG. 4 is a plan view illustrating a rear surface of an electronic device in an unfolded state according to an embodiment of the disclosure.

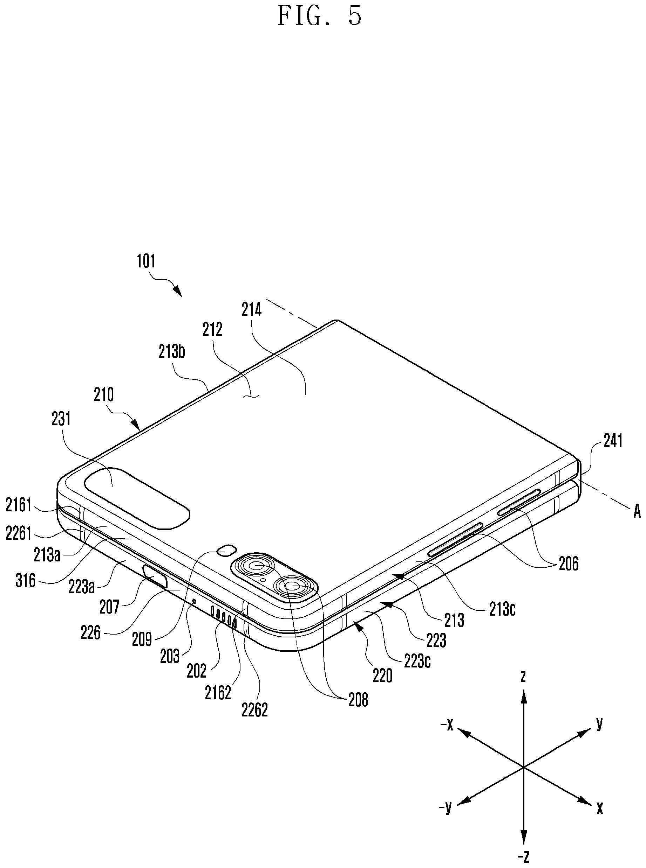

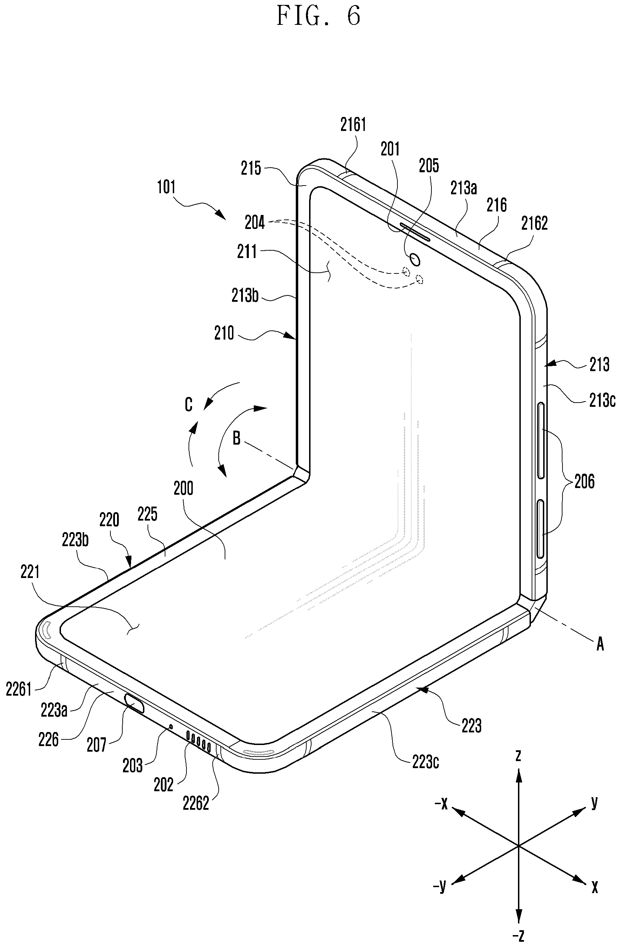

FIG. 5 is a perspective view of an electronic device in a folded state according to an embodiment of the disclosure. FIG. 6 is a perspective view of an electronic device in an intermediate state according to an embodiment of the disclosure.

Referring to FIGS. 2 to 6, an electronic device 101 may include a pair of housings 310 and 320 (e.g., foldable housings) that are rotatably connected to be folded based on a hinge module (not shown) so as to face each other. That is, the electronic device 101 may comprise a first housing 310 and a second housing 320 where the first and second housings (310, 320) are connected via a folding means, such as a hinge. The folding means is not limited to a hinge and may comprise any mechanism which allows the first and second housings (310, 320) to be rotatably connected such that an angle between the first and second housings (310, 320) may be changed by the mechanism. For example, the folding means may comprise a bendable sheet of material provided between the first and second housings (310, 320). For simplicity, the folding means may be referred to as a hinge module throughout the specification, but the skilled person would recognize that the invention is not limited to a hinge module per se, but may be operated using any suitable folding means. According to an embodiment, the electronic device 101 may include a display (e.g., a flexible display 300 (or a foldable display or a second display)) (e.g., the display module 160 in FIG. 1) disposed in an area formed by the pair of housings 310 and 320. According to an embodiment, the first housing 310 and the second housing 320 may be disposed on both sides of a folding axis (e.g., the axis A) and may be substantially symmetrical with respect to the folding axis (e.g., the axis A). According to an embodiment, the first housing 310 and the second housing 320 may have an angle or distance therebetween, which vary depending on whether the electronic device 101 is in an unfolded state (or flat state), a folded state, or an intermediate state (or half-folding state). The angle between the first housing 310 and the second housing 320 may be adjusted by a movement of the folding means.

According to an embodiment, the pair of housings 310 and 320 may include a first housing 310 (e.g., a first housing structure) coupled to the hinge module and a second housing 320 (e.g., a second housing structure) coupled to the hinge module. According to an embodiment, the first housing 310 may have a first surface 311 facing in a first direction (e.g., the forward direction) (e.g., the z-axis direction) and a second surface 312 facing in a second direction (e.g., a backward direction) (e.g., the -z-axis direction) opposite the first surface 311 in the unfolded state. According to an embodiment, the second housing 320 may have a third surface 321 facing in the first direction (e.g., the z-axis direction) and a fourth surface 322 facing in the second direction (e.g., the -z-axis direction) in the unfolded state. According to an embodiment, the electronic device 101 may operate in a manner in which the first surface 311 of the first housing 310 and the third surface 321 of the second housing 320 face in substantially the same first direction (e.g., the z-axis direction) in the unfolded state and in which the first surface 311 and the third surface 321 face each other in the folded state. According to an embodiment, the electronic device 101 may operate in a manner in which the second surface 312 of the first housing 310 and the fourth surface 322 of the second housing 320 face in substantially the same second direction (e.g., the -z-axis direction) in the unfolded state and in which the second surface 312 and the fourth surface 322 face in opposite directions to each other in the folded state. For example, in the folded state, the second surface 312 may face in the first direction (e.g., the z-axis direction) and the fourth surface 322 may face in the second direction (e.g., the -z-axis direction).

According to an embodiment, the first housing 310 may include a first side frame 313 at least partially forming the exterior of the electronic device 101 and a first rear cover 314 coupled to the first side frame 313 and forming at least a portion of the second surface 312 of the electronic device 101. According to an embodiment, the first side frame 313 may include a first side surface 313a, a second side surface 313b extending from one end of the first side surface 313a, and a third side surface 313c extending from the opposite end of the first side surface 313a. According to an embodiment, the first side frame 313 may be formed in a rectangular (e.g., square or rectangular) shape through the first side surface 313a, the second side surface 313b, and the third side surface 313c.

According to an embodiment, the second housing 320 may include a second side frame 323 at least partially forming the exterior of the electronic device 101 and a second rear cover 324 coupled to the second side frame 323 and forming at least a portion of the fourth surface 322 of the electronic device 101. According to an embodiment, the second side frame 323 may include a fourth side surface 323a, a fifth side surface 323b extending from one end of the fourth side surface 323a, and a sixth side surface 323c extending from the opposite end of the fourth side surface 323b. According to an embodiment, the second side frame 323 may be formed in a rectangular shape through the fourth side surface 323a, the fifth side surface 323b, and the sixth side surface 323c.

According to an embodiment, the pair of housings 310 and 320 are not limited to the illustrated shapes and coupling, and may be implemented by a combination and/or coupling of other shapes or parts. For example, the first side frame 313 may be integrally formed with the first rear cover 314, and the second side frame 323 may be integrally formed with the second rear cover 324.

According to an embodiment, when the electronic device 101 is in the unfolded state, the second side surface 313b of the first side frame 313 and a fifth side surface 323b of the second side frame 323 may be coupled without any gap. According to an embodiment, when the electronic device 101 is in the unfolded state, the third side surface 313c of the first side frame 313 and a sixth side surface 323c of the second side frame 323 may be coupled without any gap. According to an embodiment, the electronic device 101, in the unfolded state, may be configured such that the sum of the lengths of the second side surface 313b and the fifth side surface 323b is greater than the lengths of the first side surface 313a and/or the fourth side surface 323a. In addition, the sum of the lengths of the third side surface 313c and the sixth side surface 323c may be configured to be greater than the lengths of the first side surface 313a and/or the fourth side surface 323a.

According to an embodiment, the first side frame 313 and/or the second side frame 323 may be formed of metal or may further include a polymer injected to the metal. According to an embodiment, the first side frame 313 and/or the second side frame 323 may also include one or more conductive portions 316 and/or 326 that are electrically separated by one or more segments 3161 and 3162 and/or 3261 and 3262 formed of a polymer. In this case, the one or more conductive portions 316 and/or 326 may be electrically connected to a wireless communication circuit (e.g., the wireless communication module 192 in FIG. 1) included in the electronic device 101 so as to be used as an antenna operating in at least one designated band (e.g., a legacy band).

According to an embodiment, the first rear cover 314 and/or the second rear cover 324 may be formed of, for example, at least one of coated or tinted glass, ceramic, and polymer or metal (e.g., aluminum, stainless steel (STS), or magnesium) or a combination of at least two thereof.

According to an embodiment, the flexible display 300 may be disposed so as to extend from the first surface 311 of the first housing 310 to at least a portion of the third surface 321 of the second housing 320 across the hinge module. For example, the flexible display 300 may include a first flat portion 330a substantially corresponding to the first surface 311, a second flat portion 330b corresponding to the third surface 321, and a bendable portion 330c that connects the first flat portion 330a and the second flat portion 330b and corresponds to the hinge module.

According to an embodiment, the electronic device 101 may include a first protective cover 315 (e.g., a first protective frame or a first decoration member) coupled along the edge of the first housing 310. According to an embodiment, the electronic device 101 may include a second protective cover 325 (e.g., a second protective frame or a second decoration member) coupled along the edge of the second housing 320. According to an embodiment, the first protective cover 315 and/or the second protective cover 325 may be formed of a metal or polymer material. According to an embodiment, the first protective cover 315 and/or the second protective cover 325 may be used as decorative members.

According to an embodiment, the flexible display 300 may be positioned such that the edge of the first flat portion 330a is interposed between the first housing 310 and the first protective cover 315. According to an embodiment, the flexible display 300 may be positioned such that the edge of the second flat portion 330b is interposed between the second housing 320 and the second protective cover 325. According to an embodiment, the flexible display 300 may be positioned such that the edge of the flexible display 300 corresponding to a protective cap (not shown) disposed in an area corresponding to the hinge module is protected by the protective cap. Accordingly, the edge of the flexible display 300 may be substantially protected from the outside. According to an embodiment, the electronic device 101 may include a hinge housing 341 (e.g., a hinge cover) that supports the hinge module and is disposed to be exposed to the outside when the electronic device 101 is in the folded state and to be received inside a first space and a second space when the electronic device 101 is in the unfolded state so as to be invisible from the outside.

According to an embodiment, the electronic device 101 may include a sub-display 331 (or a first display) (e.g., the display module 160 in FIG. 1) disposed separately from the flexible display 300. According to an embodiment, the sub-display 331 may be disposed on the second surface 312 of the first housing 310 so as to be at least partially exposed, thereby replacing the display function of the flexible display 300 in the folded state. For example, the sub-display 331 may display state information of the electronic device 101 in the folded state. According to an embodiment, the sub-display 331 may be disposed to be visible from the outside through at least a partial area of the first rear cover 314. In an embodiment, the sub-display 331 may also be disposed on the fourth surface 322 of the second housing 320. In this case, the sub-display 331 may be disposed to be visible from the outside through at least a partial area of the second rear cover 324.

According to an embodiment, the electronic device 101 may include at least one of an input device 303 (e.g., a microphone), sound output devices 301 and 302, a sensor module 304, camera devices 305 and 308, a key input device 306, or a connector port 307. Although the input device 303 (e.g., a microphone), the sound output devices 301 and 302, the sensor modules 304, the camera devices 305 and 308, the key input device 306, and/or the connector port 307 indicate holes or shapes formed in the first housing 310 or the second housing 320 in the illustrated embodiment, they may be defined to encompass substantial electronic components (e.g., an input device, a sound output device, a sensor module, or a camera device) disposed inside the electronic device 101 and operating through a hole or shape.

According to an embodiment, the input device 303 may include at least one microphone 303 disposed in the second housing 320. In an embodiment, the input device 303 may include a plurality of microphones 303 arranged to sense the direction of a sound. In an embodiment, the plurality of microphones 303 may be disposed at appropriate positions in the first housing 310 and/or the second housing 320. According to an embodiment, the sound output devices 301 and 302 may include speakers 301 and 302. According to an embodiment, the speakers 301 and 302 may include a call receiver 301 disposed in the first housing 310 and a speaker 302 disposed in the second housing 320. In an embodiment, the input device 303, the sound output devices 301 and 302, and the connector port 307 may be disposed in a space provided in the first housing 310 and/or the second housing 320 of the electronic device 101, and may be exposed to the external environment through at least one hole formed in the first housing 310 and/or the second housing 320.

According to an embodiment, at least one connector port 307 may be used to transmit and receive power and/or data to and from an external electronic device. In an embodiment, at least one connector port 307 (e.g., an ear jack hole) may receive a connector (e.g., an ear jack) for transmitting and receiving an audio signal to and from an external electronic device. In an embodiment, the holes formed in the first housing 310 and/or the second housing 320 may be used in common for the input device 303 and the sound output devices 301 and 302. In an embodiment, the sound output devices 301 and 302 may include a speaker (e.g., a piezo speaker) that operates without holes formed in the first housing 310 and/or the second housing 320.

According to an embodiment, the sensor module 304 may generate an electrical signal or data value corresponding to an internal operation state of the electronic device 101 or an external environmental state. The sensor module 304, for example, may detect an external environment through the first surface 311 of the first housing 310. In an embodiment, the electronic device 101 may further include at least one sensor module disposed to detect a state of an external environment through the second surface 312 of the first housing 310. According to an embodiment, the sensor module 304 (e.g., an illuminance sensor and/or a proximity sensor) may be disposed under the flexible display 300 (e.g., under a panel) (e.g., configured as an under-display sensor or an in-display sensor) to detect an external environment through the flexible display 300. For example, the state of the external environment may relate to an ambient light level, and a photodetector may be used to detect and measure the ambient light level. As another example, the state of the external environment may relate to a humidity level, and a moisture sensor may be used to detect and measure an amount of moisture in the environment.

According to an embodiment, the sensor module 304 may include a gesture sensor, a gyro sensor, a barometer sensor, a magnetic sensor, an acceleration sensor, the Hall sensor, a grip sensor, a color sensor (e.g., an RGB (red, green, blue) sensor), an infrared (IR) sensor, a biometric sensor, a temperature sensor, a humidity sensor, an illumination sensor (or ambient light sensor (ALS)), a proximity sensor, and/or an ultrasonic sensor.

According to an embodiment, the camera devices 305 and 308 may include a first camera device 305 (e.g., a front camera device) disposed on the first surface 311 of the first housing 310 and a second camera device 308 (e.g., a rear camera device) disposed on the second surface 312 of the first housing 310. The electronic device 101 may further include a flash 309 disposed near the second camera device 308. According to an embodiment, the camera devices 305 and 308 may include one or more lenses, an image sensor, and/or an image signal processor (ISP). The flash 309 may include, for example, a luminous element such as a light-emitting diode (LED), an IR LED, a laser diode (LD), and/or a xenon lamp. According to an embodiment, the camera devices 305 and 308 may be disposed such that two or more lenses (e.g., a wide-angle lens, an ultra-wide-angle lens, and/or a telephoto lens) and image sensors are positioned on one surface (e.g., the first surface 311, the second surface 312, the third surface 321, or the fourth surface 322) of the electronic device 101. In an embodiment, the camera devices 305 and 308 may also include lenses and image sensors for time of flight (TOF).

According to an embodiment, the key input device 306 (e.g., a key button) may be disposed on the third side surface 313c of the first side frame 313 of the first housing 310. In an embodiment, the key input device 306 may also be disposed on at least one of other side surfaces 313a and 313b of the first housing 310 and/or the side surfaces 323a, 323b, and 323c of the second housing 320. In an embodiment, the electronic device 101 may exclude a part or entirety of the key input device 306, and the excluded key input device 306 may also be implemented in another form such as a soft key on the flexible display 300. In an embodiment, the key input device 306 may also be implemented using a pressure sensor included in the flexible display 300.

According to an embodiment, some camera devices 305 among the camera devices 305 and 308 and/or the sensor module 304 may be disposed to be exposed through the flexible display 300. For example, the first camera device 305 and/or the sensor module 304 may be disposed in the internal space of the electronic device 101 so as to be exposed to the external environment through an opening (e.g., a through-hole) formed at least partially in the flexible display 300. For example, some sensor modules 304 may be disposed in the internal space of the electronic device 101 so as to perform their functions without being visually exposed through the flexible display 300. For example, in this case, an opening may not be required in a corresponding area of the flexible display 300 facing the sensor module 304.

Referring to FIG. 6, the electronic device 101 may be operated to maintain an intermediate state through a hinge module. In this case, the electronic device 101 may control the flexible display 300 such that the display area corresponding to the first surface 311 may display content different from that displayed on the display area corresponding to the third surface 321. According to an embodiment, the electronic device 101 may operate in a substantially unfolded state (e.g., the unfolded state in FIG. 2) and/or in a substantially folded state (e.g., the folded state in FIG. 5), based on a predetermined inflection angle (e.g., an angle between the first housing 310 and the second housing 320 in the intermediate state), through the hinge module. For example, the electronic device 101 may operate to switch to the unfolded state (e.g., the unfolded state in FIG. 2) if a pressing force is applied in an unfolding direction (the direction B) through the hinge module in the state in which the electronic device 101 is unfolded at a predetermined inflection angle. For example, the electronic device 101 may operate to switch to the folded state (e.g., the folded state in FIG. 5) if a pressing force is applied in a folding direction (the direction C) through the hinge module in the state in which the electronic device 101 is unfolded at a predetermined inflection angle. In an embodiment, the electronic device 101 may operate to maintain the unfolded state (not shown) at various angles through the hinge module. That is, the electronic device 101 may operate in different states according to the angle provided between the first housing and the second housing.

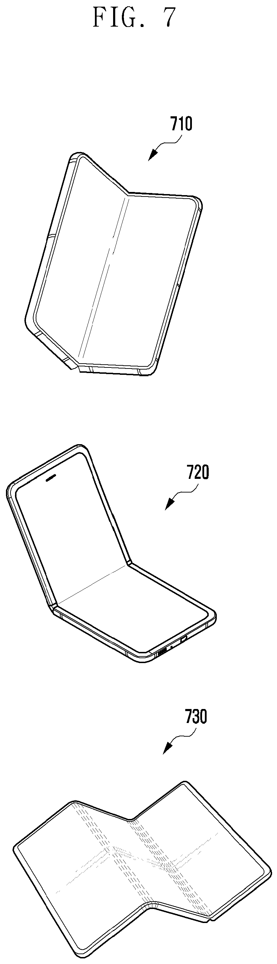

FIG. 7 is a diagram illustrating an example of an electronic device according to an embodiment of the disclosure.

According to an embodiment, FIG. 7 may show examples of various form factors (e.g., configurations or arrangements) of the electronic device 101 depending on various display types. According to an embodiment, as illustrated in FIG. 7, the electronic device 101 may be implemented in various forms, and a display (e.g., the display module 160 in FIG. 1) may be provided in various ways depending on the implementation form of the electronic device 101.

Although the electronic device 101 according to the embodiment disclosed in this document will be described as an electronic device 101 (e.g., a foldable device 710, 720, or 730) having a foldable form factor by way of example, the electronic device 101 according to an embodiment and the operation thereof are not limited thereto. For example, the electronic device 101 is capable of folding and unfolding operations, and may operate in various foldable form factors that support a call function in the folded state, the unfolded state, or the intermediate state.

In an embodiment, the unfolded state may indicate an opened state, an open state, or a flat state. In an embodiment, the unfolded state may be a state in which the first housing and the second housing are arranged side by side and may indicate a state in which the electronic device 101 is fully unfolded. In an embodiment, the unfolded state may be a state in which the angle between the first housing and the second housing becomes about 180 degrees so that the first surface of the first housing and the second surface of the second housing may be disposed to face in the same direction (e.g., a first direction).

In an embodiment, the folded state may indicate a closed state or a close state. In an embodiment, the folded state may indicate a state in which the first housing and the second housing are disposed to face each other so that the electronic device 101 is fully folded. In an embodiment, the folded state may indicate a state in which the first housing and the second housing have a narrow angle (e.g., about 0 degrees to about 5 degrees) therebetween so that a first surface 811 of the first housing and a second surface of the second housing may face each other. In the folded state, a portion of the first housing may be in contact with a portion of the second housing. For example, the first surface 811 of the first housing may be in contact with the second surface of the second housing.

In an embodiment, the intermediate state may indicate a state in which the first housing and the second housing are disposed at a predetermined angle, and the electronic device 101 may not be in the unfolded state or the folded state. In an embodiment, the intermediate state may indicate a state in which the first surface of the first housing and the second surface of the second housing form a predetermined angle (e.g., about 6 degrees to about 179 degrees). That is, in the intermediate state, the electronic device 101 may be neither fully folded nor fully unfolded, but in a state therebetween.

According to an embodiment, the electronic device 101 (e.g., a foldable device 710, 720, or 730) may indicate an electronic device capable of being folded such that two different areas of a display (e.g., the display module 160 in FIG. 1) substantially face each other or face in opposite directions. In general, the user may fold the electronic device 101 such that two different areas of the display (e.g., the display module 160 in FIG. 1) of the electronic device 101 (e.g., the foldable device 710, 720, or 730) face each other or face in opposite directions when carrying the electronic device 101, and unfold the display such that two different areas thereof form a substantially flat plate when actually using the electronic device.

According to an embodiment, the electronic device 101 (e.g., the foldable device 710, 720, or 730) may include a form factor (e.g., 710 or 720) including two display surfaces (e.g., a first display surface and a second display surface) based on one folding axis and/or a form factor (e.g., 730) including at least three display surfaces (e.g., a first display surface, a second display surface, and a third display surface) based on at least two folding axes. Various embodiments are not limited thereto, and this is only an example, and the number of folding axes capable of being provided in the electronic device 101 is not limited. According to an embodiment, the display (e.g., the display module 160 in FIG. 1) may be folded or unfolded in various ways (e.g., in-folding, out-folding, or in/out folding) depending on an implementation form of the electronic device 101. According to an embodiment, the electronic device 101 may include various foldable types such as a vertically foldable type, a horizontally foldable type, a G-foldable type, or a Z-foldable type.

According to an embodiment, the electronic device 101 may form a first display (e.g., a main display) (e.g., the display module 160 in FIG. 1) on the first and second surfaces, which constitute the front surface of the electronic device 101. The first display may be entirely formed on the front surface (e.g., in the first direction of the electronic device 101). The first display may include a flexible display in which at least a partial area thereof is able to be deformed into a flat or curved plane. The first display may be folded left, right, up, or down, based on a folding axis (e.g., the axis A). The first display may include a first display area corresponding to the first surface or a second display area corresponding to the second surface.

According to an embodiment, the electronic device 101 may form a second display (e.g., a cover display or a sub-display) (e.g., the display module 160 in FIG. 1) on a portion of the rear surface of the electronic device 101. The second display may be formed on at least a portion of the third surface of the electronic device 101.

According to an embodiment, when the electronic device 101 is in the unfolded state, the first display may be turned on (or activated) and the second display may be turned off (or deactivated). If no user input (e.g., a touch or button selection) is detected for a predetermined time (e.g., about 5 seconds, about 10 seconds, or about 1 minute) while the first display is in the on state, the electronic device 101 may turn off the first display.

According to an embodiment, if a user input (e.g., a touch or button selection) is detected on the second display while the second display is in the off state, the electronic device 101 may turn on the second display. According to an embodiment, the second display may be turned on based on a user input or a designated operation of the electronic device 101 when the electronic device 101 is in the unfolded or folded state.

According to an embodiment, when the electronic device 101 is in the folded state or the intermediate state, the first display may be turned off and the second display may be turned on. If no user input is detected for a predetermined time while the second display is in the on state, the electronic device 101 may turn off the second display. when the electronic device 101 is in the folded state or the intermediate state and when the second display is turned off, if a button formed (or mounted) on the electronic device 101 is selected, the electronic device 101 may turn on the second display. Alternatively, when the electronic device 101 is in the folded state or the intermediate state and if a user input is detected on the second display after the second display is turned off, the electronic device 101 may turn on the second display.

In an embodiment of the disclosure, although the electronic device 101 is described by way of example as a device having asymmetrical front and rear displays (e.g., the first display on the front surface and the second display on the rear surface (or cover surface)) for convenience of explanation, various embodiments according to the disclosure are not limited thereto.

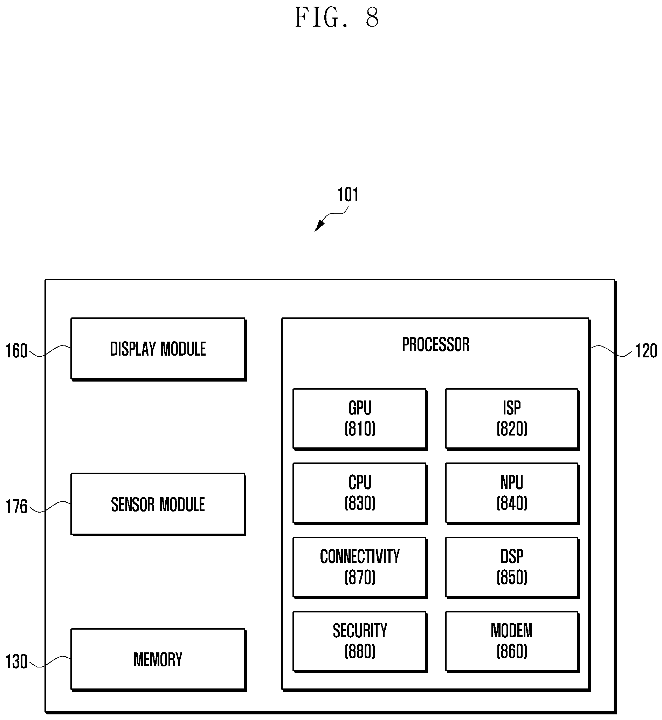

FIG. 8 is a diagram schematically illustrating the configuration of an electronic device according to an embodiment of the disclosure.

Referring to FIG. 8, an electronic device 101 according to an embodiment of the disclosure may include a display module 160, a sensor module 176, a memory 130, and/or a processor 120. According to an embodiment, the electronic device 101 may include all or at least some of the elements of the electronic device 101 described with reference to FIG. 1.

According to an embodiment, the display module 160 (or display) may include the same or similar configurations as the display module 160 in FIG. 1. According to an embodiment, the display module 160 may include a display and visually provide a variety of information to the outside of the electronic device 101 (e.g., a user). According to an embodiment, the display module 160 may visually provide an application being executed and a variety of information (e.g., content, text, images, and videos) related to use thereof under the control of the processor 120.

According to an embodiment, the display module 160 (or display) may include a first display (e.g., a main display) on the front surface and a second display (e.g., a cover display) on the rear surface. According to an embodiment, the display module 160 may include a touch sensor, a pressure sensor capable of measuring the intensity of a touch, and/or a touch panel (e.g., a digitizer) for detecting a magnetic stylus pen. According to an embodiment, the display module 160 may measure a change in a signal (e.g., voltage, the amount of light, resistance, electromagnetic signals, and/or electric charge) for a specific position of the display module 160, based on a touch sensor, a pressure sensor, and/or a touch panel, thereby detecting a touch input and/or a hovering input (or proximity input). According to an embodiment, the display module 160 may include a liquid crystal display (LCD), an organic light-emitted diode (OLED), or an active matrix organic light-emitting diode (AMOLED). According to an embodiment, the display module 160 may include a flexible display.

According to an embodiment, the sensor module 176 (or sensor circuit) may correspond to the sensor module 176 described with reference to FIG. 1. According to an embodiment, the sensor module 176 may include a state detection sensor. According to an embodiment, the state detection sensor may include, for example, at least one of a proximity sensor, an illuminance sensor, a magnetic sensor, the Hall sensor, a gesture sensor, a bending sensor, an infrared sensor, a touch sensor, a pressure sensor, or an infrared camera, or a combination thereof.

According to an embodiment, the state detection sensor (or state detection circuit) may be located on one side (e.g., a folding axis, an end of a housing, below a display (e.g., under a panel), and/or a bezel of a display) of the electronic device 101 to measure a folded (or unfolded) angle of the electronic device 101. According to an embodiment, the electronic device 101 may determine a designated state of the electronic device 101, based on sensor data (e.g., a folded angle) using the state detection sensor of the sensor module 176. For example, an angle between the first housing and the second housing may be determined based on data obtained using the sensor module 176, and a state of the electronic device 101 may be determined based on the determined angle. The electronic device 101 may be determined to be in a folded, unfolded, or intermediate state using the data obtained from the sensor module 176.

According to an embodiment, the memory 130 may correspond to the memory 130 in FIG. 1. According to an embodiment, the memory 130 may store a variety of data used by the electronic device 101. In an embodiment, the data may include, for example, applications (e.g., the programs 140 in FIG. 1) and input data or output data for commands related to the applications.

In an embodiment, the data may include a variety of sensor data (e.g., acceleration sensor data, gyro sensor data, and/or Hall sensor data) obtained from the sensor module 176. In an embodiment, the data may include various reference data that is configured in the memory 130 to identify a designated state (e.g., a first designated state (e.g., an unfolded state), a second designated state (e.g., a partially folded state), and a third designated state (e.g., a folded state)) of the electronic device 101. In an embodiment, the data may include a variety of configuration information configured in the memory 130 to control functions related to applications, based on the designated state of the electronic device 101. In an embodiment, the data may include a variety of learning data obtained based on the user's learning through interaction with the user.

According to an embodiment, the memory 130 may store instructions that, when executed, cause the processor 120 to operate. For example, the application may be stored as software (e.g., the programs 140 in FIG. 1) in the memory 130 and executable by the processor 120. According to an embodiment, the applications may be various applications capable of providing various functions or services (e.g., a call function, a mute function, and/or a noise canceling function) in the electronic device 101.

According to an embodiment, the processor 120 may perform an application layer processing function requested by the user of the electronic device 101. According to an embodiment, the processor 120 may provide functional control and commands for various blocks of the electronic device 101. According to an embodiment, the processor 120 may perform operations or data processing related to control and/or communication of respective elements of the electronic device 101. For example, the processor 120 may include at least some of the configurations and/or functions of the processor 120 in FIG. 1. The processor 120 may be operatively connected to, for example, the elements of the electronic device 101. The processor 120 may load commands or data received from other elements of the electronic device 101 into the memory 130, process the commands or data stored in the memory 130, and store resultant data thereof.

According to an embodiment, the processor 120 may be an application processor (AP). According to an embodiment, the processor 120 may be a system semiconductor executing operation and multimedia driving functions of the electronic device 101. According to an embodiment, the processor 120 may be configured in the form of a system-on-chip (SoC) and may include a technology-intensive semiconductor chip in which several semiconductor technologies are integrated into one and in which system blocks are implemented as a single chip.

According to an embodiment, the system blocks of the processor 120, as illustrated in FIG. 8, may include a graphics processing unit (GPU) 810, an image signal processor (ISP) 820, a central processing unit (CPU) 830, a neural processing unit (NPU) 840, a digital signal processor 850, a modem 860, a connectivity 870, and/or a security 880 block.

According to an embodiment, the GPU 810 may serve to perform graphics processing. According to an embodiment, the GPU 810 may receive a command from the CPU 830 and perform graphics processing to express the shapes, positions, colors, shades, motions, and/or textures of things (or objects) on a display.

According to an embodiment, the ISP 820 may serve to perform processing and correction of images and videos. According to an embodiment, the ISP 820 may serve to correct unprocessed data (e.g., raw data) transmitted from an image sensor of the camera module 180, thereby generating an image in a form desired by the user. According to an embodiment, the ISP 820 may correct physical limitations that may occur in the camera module 180, interpolate red, green, and blue (R/G/B) values, and remove noise. According to an embodiment, the ISP 820 may perform post-processing such as adjusting partial brightness of an image and emphasizing detailed parts. For example, the ISP 820 may generate a user-preferred result through its own process of tuning and correcting image quality of an image obtained through the camera module 180.

According to an embodiment, the ISP 820 may support an artificial intelligence-based image processing technology to improve image quality, rapidly process images, and reduce current consumption (e.g., low power consumption). For example, the ISP 820 may improve image quality while maintaining low power consumption and support artificial intelligence-based image capture for the same. According to an embodiment, the ISP 820 may support artificial intelligence-based image processing related to improving video quality in a low-illuminance environment. According to an embodiment, the ISP 820 may support a scene segmentation (e.g., image segmentation) technology for recognizing and/or classifying parts of a scene being captured in association with the NPU 840. For example, the ISP 820 may include a function of processing objects such as sky, grass, and/or skin by applying different parameters thereto. According to an embodiment, the ISP 820, when capturing an image through an artificial intelligence function, may detect and display a human face or adjust the brightness, focus, and/or color of the image using the coordinates and information of the face.

According to an embodiment, the CPU 830 may play a role corresponding to the processor 120. According to an embodiment, the CPU 830 may decode user commands, perform arithmetic and logical operations, and/or perform data processing. For example, the CPU 830 may serve to execute functions such as storage, interpretation, calculation, and control. According to an embodiment, the CPU 830 may control overall functions of the electronic device 101. For example, the CPU 830 may execute all software (e.g., applications) of the electronic device 101 and control hardware devices, based on an operating system (OS).

According to an embodiment, the NPU 840 may serve to perform processing optimized for a deep learning algorithm of artificial intelligence. According to an embodiment, the NPU 840 is a processor optimized for deep learning algorithm operation (e.g., artificial intelligence operation), and may process big data quickly and efficiently as executed by a human neural network. For example, the NPU 840 may be mainly used for artificial intelligence operations. According to an embodiment, the NPU 840 may serve to automatically adjust the focus by recognizing objects, environments, and/or people in the background when capturing images through the camera module 180, automatically switching the shooting mode of the camera module 180 to a food mode when taking pictures of food, and/or deleting only unnecessary subjects from the photographed result.

According to an embodiment, the electronic device 101 may support an integrated machine learning process by interacting with all processors such as the GPU 810, the ISP 820, the CPU 830, and the NPU 840.

According to an embodiment, the DSP 850 may indicate an integrated circuit that helps process digital signals quickly. According to an embodiment, the DSP 850 may execute a function of converting an analog signal into a digital signal and processing the same at high speed.

According to an embodiment, the modem 860 may serve to enable various communication functions to be used in the electronic device 101. For example, the modem 860 may support communication such as telephone calls and data transmission/reception while exchanging signals with a base station. According to an embodiment, the modem 860 may include an integrated modem (e.g., a cellular modem, an LTE modem, a 5G modem, a 5G-Advanced modem, and a 6G modem) supporting communication technologies such as LTE and 2G to 5G. According to an embodiment, the modem 860 may include an artificial intelligence modem to which an artificial intelligence algorithm is applied.

According to an embodiment, the connectivity 870 may support wireless data transmission based on IEEE 802.11. According to an embodiment, the connectivity 870 may support communication services based on IEEE 802.11 (e.g., Wi-Fi) and/or 802.15 (e.g., Bluetooth, ZigBee, or UWB). For example, the connectivity 870 may support a communication service for unspecified people in a local area such as an indoor area using an unlicensed band.

According to an embodiment, the security 880 may provide an independent secure execution environment between data or services stored in the electronic device 101. According to an embodiment, the security 880 may serve to prevent the electronic device 101 being hacked from the outside through software and hardware security in the process of user authentication when providing services such as biometric identification of the electronic device 101, a mobile ID, and/or payment. For example, the security 880 may provide device security for enhancing the security of the electronic device 101 itself and an independent security execution environment in a security service based on user information such as a mobile ID, payment, and a car key in the electronic device 101.

According to an embodiment of the disclosure, the processor 120 may include a processing circuit and/or executable program elements. According to an embodiment, based on a processing circuit and/or executable program elements, the processor 120 may control (or process) an operation related to supporting a function (e.g., a call function, a mute function, and/or a noise canceling function) related to an application (e.g., a call application), based on a designated state of the electronic device 101 and/or a state change from the designated state.

According to an embodiment, the processor 120 may perform an operation of monitoring a change in the state of the electronic device 101, based on detecting a call start in a designated state of the electronic device 101. According to an embodiment, the processor 120 may perform an operation of executing a designated function, based on determining that the state change of the electronic device 101 satisfies the first designated condition. According to an embodiment, the processor 120 may perform an operation of processing an audio signal, based on a designated function. According to an embodiment, based on determining that the state change of the electronic device 101 satisfies a second designated condition, the processor 120 may perform a first operation or a second operation, based on the configuration of the electronic device 101.

According to an embodiment, the electronic device 101 may monitor a state of the electronic device 101 while a call between the electronic device 101 and a second electronic device is in operation, in response to detecting the connection of the call with the second electronic device. If the electronic device 101 detects a change in the state of the electronic device 101, from a first state to a second state, and the change in the state of the electronic device 101 satisfies a first condition, the electronic device 101 may execute a designated function. The electronic device 101 may process an audio signal based on the designated function.

According to an embodiment, a detailed operation of the processor 120 of the electronic device 101 will be described with reference to drawings to be described later.

According to an embodiment, operations performed by the processor 120 may be implemented as a recording medium (or a computer program product). For example, the recording medium may include a non-transitory computer-readable recording medium that stores a program for executing various operations performed by the processor 120.

The embodiments described in this disclosure may be implemented in a recording medium readable by a computer or a device similar thereto using software, hardware, or a combination thereof. According to hardware implementation, the operations described in an embodiment may be implemented using at least of application specific integrated circuits (ASICs), digital signal processors (DSPs), digital signal processing devices (DSPDs), programmable logic devices (PLDs), field programmable gate arrays (FPGAs), processors, controllers, micro-controllers, micro-processors, and/or an electrical unit for performing other functions.

In an embodiment, a recording medium (or computer program product) may include a computer-readable recording medium storing a program that performs monitoring a state change of the electronic device 101, based on detecting a call start in a designated state of the electronic device 101, executing a designated function, based on determining that the state change of the electronic device 101 satisfies a first designated condition, processing an audio signal, based on the designated function, and, based on determining that the state change of the electronic device 101 satisfies a second designated condition, processing a first operation or a second operation, based on a configuration of the electronic device 101.

An electronic device 101 according to an embodiment of the disclosure may include a sensor circuit (e.g., the sensor module 176 in FIG. 1 or FIG. 8), a microphone (e.g., the input device 303), and a processor 120 operatively connected to the sensor circuit and the microphone. The electronic device 101 may be a foldable electronic device comprising a first housing and a second housing with a folding means provided between the first and second housings such that the folding means enables the first and second housings to rotatably move relative to one another.

According to an embodiment, the processor 120 may operate to monitor a state change of the electronic device 101, based on detecting a call start in a designated state of the electronic device 101. According to an embodiment, the processor 120 may operate to execute a designated function, based on determining that the state change of the electronic device 101 satisfies a first designated condition. According to an embodiment, the processor 120 may operate to process an audio signal, based on the designated function. According to an embodiment, the processor 120 may operate to process, based on determining that the state change of the electronic device 101 satisfies a second designated condition, a first operation or a second operation, based on a configuration of the electronic device 101.

According to an embodiment, the designated function may include a mute function or a noise canceling function for processing noise introduced into the microphone during a call.

According to an embodiment, the processor 120 may operate to monitor a state change in which the electronic device 101 changes from a first designated state to a second designated state, based on the sensor circuit, during a call. According to an embodiment, the processor 120 may operate to recognize an angle change in which an angle between a first housing and a second housing of the electronic device 101 changes into an angle smaller than a designated angle corresponding to the designated state, based on a result of the monitoring.

According to an embodiment, the first designated condition may include a first angle designated to trigger processing of noise introduced from the microphone during a call and a designated angular velocity at which the first angle changes to a second angle designated to execute noise processing.

According to an embodiment, the processor 120 may operate to calculate an angular velocity from the first angle to the second angle when the angle between the first housing and the second housing reaches the first angle, and determine whether or not the first designated condition is satisfied based on whether or not the angular velocity to the second angle is greater than or equal to a designated angular velocity.

According to an embodiment, the second designated condition may include a state in which the electronic device switches to a third designated state.

According to an embodiment, the processor 120 may operate to execute a mute function or a noise canceling function based on a configuration for noise processing, based on determining that the first designated condition is satisfied.

According to an embodiment, the processor 120 may operate to determine the second designated condition, based on sensor data of the sensor circuit. According to an embodiment, the processor 120 may operate to process a first operation of terminating a call connection according to a first configuration of the electronic device 101, based on determining that the second designated condition is satisfied. According to an embodiment, the processor 120 may operate to process, based on determining that the second designated condition is satisfied, a second operation of releasing the designated function when a designated period of time elapses while maintaining a call connection based on a second configuration of the electronic device 101.

According to an embodiment, the processor 120 may operate to process a third operation of releasing the designated function, based on determining that the second designated condition is not satisfied.

According to an embodiment, the processor 120 may operate to detect reaching a first angle, detect reaching a second angle, calculate an angular velocity in a change from the first angle to the second angle, determine whether the angular velocity is greater than or equal to a designated angular velocity, and execute the designated function, based on determining that the angular velocity is greater than or equal to the designated angular velocity.

According to an embodiment, the processor 120 may operate to execute a designated function at a designated third angle, based on determining that the angular velocity is greater than or equal to the designated angular velocity. According to an embodiment, the processor 120 may operate to execute a designated function at a designated fourth angle, based on determining that the angular velocity is less than the designated angular velocity.

According to an embodiment, the third angle may include an angle smaller than the second angle. According to an embodiment, the fourth angle may include an angle smaller than the third angle.

According to an embodiment, the processor 120 may operate to perform, based on determining that the angular velocity is greater than or equal to the designated angular velocity, noise cancelling based on application of a designated first noise filter and perform, based on determining that the angular velocity is less than the designated angular velocity, noise cancelling based on application of a designated second noise filter.

According to an embodiment, the processor 120 may operate to execute a designated function, determine whether or not there is a state change of the electronic device, and release the designated function, based on determining that there is no state change.

According to an embodiment, the processor 120 may control a display to display a user interface including a first guide object related to call mute in response to execution of a designated function during a call. According to an embodiment, the processor 120, in response to a call end, may control the display to convert the first guide object into a second guide object and display a user interface including the second guide object.

Hereinafter, an operation method of the electronic device 101 according to various embodiments will be described in detail. Operations performed by the electronic device 101 according to various embodiments may be performed by the processor 120 including various processing circuits and/or executable program elements of the electronic device 101. According to an embodiment, operations performed by the electronic device 101 may be executed by instructions that are stored in the memory 130 and cause, when executed, the processor 120 to operate.

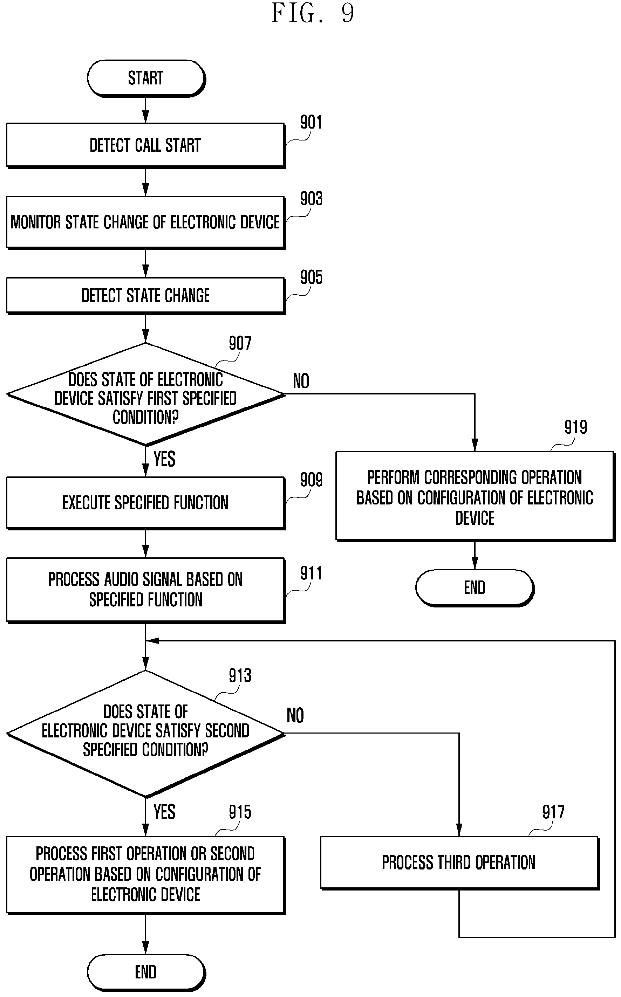

FIG. 9 is a flowchart illustrating an operation method of an electronic device according to an embodiment of the disclosure.

According to an embodiment, FIG. 9 may illustrate an example of supporting the electronic device 101 according to an embodiment to process a designated function when the state thereof changes into a second designated state (e.g., a folded state) (or in a folding operation) while the electronic device 101 performs a call in a first designated state (e.g., an unfolded state or intermediate state). For example, the designated function may include a function (e.g., a mute function or a noise canceling function) for processing (e.g., improving, removing, filtering, changing or reducing) noise introduced into a microphone during a call in the electronic device 101.

In the electronic device 101 according to an embodiment of the disclosure, a method of processing noise introduced through a microphone, based on a designated state and/or a state change from the designated state, may be performed according to, for example, the flowchart illustrated in FIG. 9. The flowchart shown in FIG. 9 is only a flowchart according to an embodiment of processing noise in response to a state of the electronic device 101 during a call using the electronic device 101, and at least some operations may be performed in different sequences, may be performed in parallel, or may be performed as independent operations, or at least some other operations may be performed complementary to at least some operations thereof. According to an embodiment of the disclosure, operations 901 to 917 may be performed by at least one processor 120 of the electronic device 101.

As shown in FIG. 9, an operation method performed by the electronic device 101 according to an embodiment (e.g., an operation method for supporting processing of noise that may occur during a call in response to the state of the electronic device 101) may include an operation 901 of detecting a call start, an operation 903 of monitoring a change in the state of the electronic device 101, an operation 905 of detecting a state change, an operation 907 of determining whether or not the state of the electronic device 101 satisfies a first designated condition, an operation 909 of executing a designated function, based on determining that the state of the electronic device 101 satisfies the first designated condition, an operation 911 of processing an audio signal, based on the designated function, an operation 913 of determining whether or not the state of the electronic device 101 satisfies a second designated condition after processing the audio signal, an operation 915 of processing, based on determining that the state of the electronic device 101 satisfies the second designated condition, a first operation or a second operation, based on the configuration of the electronic device 101, an operation 917 of processing a third operation, based on determining that the state of the electronic device 101 does not satisfy the second designated condition, and an operation 919 of processing, based on determining that the state of the electronic device 101 does not satisfy the first designated condition, a corresponding operation, based on the configuration of the electronic device 101. In this specification, the terms 'designated' and 'predetermined' may be used interchangeably.

Referring to FIG. 9, the processor 120 of the electronic device 101 may detect a call start in operation 901. According to an embodiment, the processor 120 may receive a user input for initiating a call (e.g., execution of an outgoing call or execution of reception of an incoming call, based on a call application) with an external electronic device from the user. According to an embodiment, the electronic device 101 may determine a call start, in response to receiving a user input indicative of a call start. According to an embodiment, the electronic device 101 may determine a call start in response to detecting a connection of the electronic device 101 with a second electronic device through a wireless network. According to an embodiment, the user may start a call in the unfolded state of the electronic device 101 (e.g., a first designated state). Whilst the method herein is described in relation to the electronic device 101 being in an unfolded state, the skilled person would understand that the method would equally apply to the electronic device 101 being in an intermediate state, especially in the case that the intermediate state is substantially an unfolded state (for example, if the angle of the electronic device 101 is at least 90 degrees, 120 degrees or 150 degrees).

In operation 903, the processor 120 may monitor a change in the state of the electronic device 101. According to an embodiment, the processor 120 may monitor a state change (e.g., a folding operation) from a first designated state (for example, an unfolded or substantially unfolded state) to a second designated state (e.g., the intermediate state) of the electronic device 101 during a call. The second designated state may be a state in which an inflection angle of the electronic device 101 is smaller than the inflection angle of the electronic device 101 when the electronic device 101 is in the first designated state. The first designated state may be a state in which an inflection angle (that is, the angle between the first housing and the second housing) is greater than a first predetermined angle. The second designated state may be a state in which the inflection angle is less than a second predetermined angle, where the second predetermined angle is smaller than the first predetermined angle. The second designated state may be a state in which the inflection angle is less than the second predetermined angle but greater than a third predetermined angle, where the third predetermined angle is smaller than the second predetermined angle. According to an embodiment, the processor 120 may identify sensor data (e.g., acceleration sensor data and/or gyro sensor data) of the sensor module 176, based on a designated sensor cycle. According to an embodiment, the processor 120 may monitor a change in the angle (e.g., an inflection angle) between the first housing and the second housing of the electronic device 101, based on the sensor data. That is, the sensor data may be used by the processor 120 to determine the inflection angle, or a change in the inflection angle, of the electronic device 101.

In operation 905, the processor 120 may detect a state change, based on the monitoring result. According to an embodiment, the processor 120 may recognize an angle (e.g., an inflection angle) between the first housing and the second housing of the electronic device 101, based on the sensor data (e.g., acceleration sensor data and/or gyro sensor data) of the sensor module 176. According to an embodiment, the processor 120 may determine the state change, based on a change in the angle. For example, the processor 120 may determine the state change, based on recognizing a change in the angle from a designated angle corresponding to the first designated state (e.g., about 180 degrees corresponding to the unfolded state) to an angle less than the designated angle.

In operation 907, the processor 120 may determine whether or not the state of the electronic device 101 satisfies a first designated condition. According to an embodiment, the first designated condition may include a first angle (e.g., about 60 degrees) designated to trigger processing of noise introduced from a microphone during a call and a designated angular velocity (e.g., about 0.36 degrees/ms) at which the first angle changes to a second angle (e.g., about 40 degrees) designated to execute noise processing.

According to an embodiment, when the angle (e.g., an inflection angle) between the first housing and the second housing reaches the first angle (e.g., about 60 degrees), the processor 120 may determine an angular velocity from the first angle to the second angle (e.g., about 40 degrees). That is, when the inflection angle reaches the first angle, the processor 120 may start a timer to determine a length of time until the inflection angle reaches the second angle. The angular velocity from the first angle to the second angle can then be calculated using the result of the timer and the distance that the electronic device 101 moves from the first angle to the second angle. According to an embodiment, the processor 120 may, based on the result of determination, determine whether or not the first designated condition is satisfied based on whether the angular velocity to the second angle (or to an angle smaller than the second angle) is greater than or equal to a designated angular velocity (e.g., about 0.36 degrees/ms). According to an embodiment, the processor 120 may determine that the first designated condition is satisfied if the angular velocity to the second angle is greater than or equal to the designated angular velocity, and may determine that the first designated condition is not satisfied if the angular velocity to the second angle is less than the designated angular velocity or if the second angle is not reached.

Based on determining that the state of the electronic device 101 satisfies the first designated condition in operation 907 (e.g., "YES" in operation 907), the processor 120 may execute a designated function in operation 909. According to an embodiment, the designated function may include a function for processing (e.g., improving, removing, filtering, changing or reducing) noise introduced into a microphone during a call. For example, the designated function may include a mute function and/or a noise canceling function. According to an embodiment, the processor 120 may determine that the state of the electronic device 101 satisfies the first designated condition and execute a mute function or a noise canceling function, based on the configuration of the electronic device 101 for noise processing.

In operation 911, the processor 120 may process audio signals, based on the designated function. According to an embodiment, the processor 120 may mute an audio signal input to the microphone, based on execution of the mute function, where the mute function is the designated function. For example, the processor 120 may turn off (or deactivate) the microphone or remove audio signals input to the microphone while the mute function is being executed, thereby preventing the signals from being transmitted to an external electronic device connected through a communication circuit (e.g., the wireless communication module 196 in FIG. 1). According to an embodiment, the processor 120, based on the execution of the noise canceling function as the designated function, may operate to remove noise from the audio signal input to the microphone by applying a designated noise filter to the audio signal.

In operation 913, the processor 120 may determine whether or not the state of the electronic device 101 satisfies a second designated condition. According to an embodiment, the second designated condition may include the state in which the electronic device 101 switches to a third designated state (e.g., a folded state). For example, the second designated condition may include the electronic device 101 being in a folded state such that an inflection angle is zero degrees, or a front surface of the first housing contacts a front surface of the second housing. According to an embodiment, the processor 120 may determine whether or not the electronic device 101 is in the folded state, based on sensor data (e.g., inflection angle data or Hall sensor data) of the sensor module 176. According to an embodiment, the processor 120 may recognize an angle (e.g., an inflection angle) between the first housing and the second housing, based on sensor data (e.g., acceleration sensor data and/or gyro sensor data) of the sensor module 176.

According to an embodiment, the processor 120 may determine that the second designated condition is satisfied if the angle is recognized as a designated angle (e.g., approximately 0 degrees corresponding to the folded state). The processor 120 may determine that the second designated condition is satisfied if a surface of the first housing is in contact with a surface of the second housing. According to an embodiment, the processor 120 may recognize the occurrence of a close flag, based on sensor data (e.g., Hall sensor data) of the sensor module 176. According to an embodiment, the processor 120 may determine that the second designated condition is satisfied if the occurrence of the close flag is recognized.

The processor 120, based on determining that the state of the electronic device 101 satisfies the second designated condition in operation 913 (e.g., "YES" in operation 913), may perform an operation of processing a first operation or a second operation, based on the configuration of the electronic device 101, in operation 915.

According to an embodiment, the processing of the first operation and the second operation may be determined based on preconfigured configuration information of the electronic device 101. According to an embodiment, the electronic device 101 may have various configurations depending on a folding operation. For example, configurations related to call control may be supported based on a folding operation of the electronic device 101. For example, a configuration of a function of automatically terminating a call when the state of the electronic device 101 changes from the unfolded state to the folded state during the call may be included.

According to an embodiment, if a folded state is detected (e.g., if the second designated condition is satisfied) during a call, the processor 120 may process a first operation of terminating the call connection (e.g., call disconnection), based on a first configuration (e.g., an automatic termination function is configured to be activated) of the electronic device 101. According to an embodiment, the processing of the first operation may include a situation in which a call is terminated by an external electronic device connected to the electronic device 101 for a call.

According to an embodiment, when a folded state is detected (e.g., if the second designated condition is satisfied) during a call, the processor 120 may process a second operation of maintaining a call connection by the electronic device 101, based on a second configuration (e.g., an automatic termination function is configured to be inactive) of the electronic device 101, and releasing a mute function

(e.g., unmuting) after a predetermined time elapses. According to an embodiment, the processor 120 may perform an operation of processing an audio signal input into the microphone, based on the release of the mute function, and transmitting the audio signal to the outside.

The processor 120 may perform an operation of processing a third operation, based on determining that the state of the electronic device 101 does not satisfy the second designated condition in operation 913. According to an embodiment, the case where the second designated condition is not satisfied may include, for example, the state in which the state of the electronic device 101 satisfies the first designated condition and then in which a certain angle is maintained before entering the second designated condition. For example, it may include the state in which the electronic device 101 remains in the intermediate state (e.g., a third designated state) in which the electronic device 101 has a certain angle, instead of being fully folded.

According to an embodiment, the case where the second designated condition is not satisfied may include, for example, an operation (e.g., an unfolding operation) in which the state of the electronic device 101 satisfies the first designated condition and then changes back to the first designated state (e.g., the unfolded state). According to an embodiment, the processor 120 may process a third operation, based on determining that the second designated condition is not satisfied. According to an embodiment, the processor 120 may release the mute function (e.g., unmuting). According to an embodiment, the processor 120 may perform an operation of processing an audio signal input into the microphone, based on the release of the mute function, and transmitting the audio signal to an external electronic device.

The processor 120, based on determining that the state of the electronic device 101 does not satisfy the first designated condition in operation 907 (e.g., "No" in operation 907), may perform a corresponding operation in operation 919. According to an embodiment, the processor 120 may proceed to operation 913, based on the configuration of the electronic device 101, or determine whether or not to perform a designated function (e.g., a mute function or application of a noise filter), based on a designated condition, and process an operation corresponding to the designated function. According to an embodiment, the execution of the corresponding operation will be described with reference to the drawings to be described later.

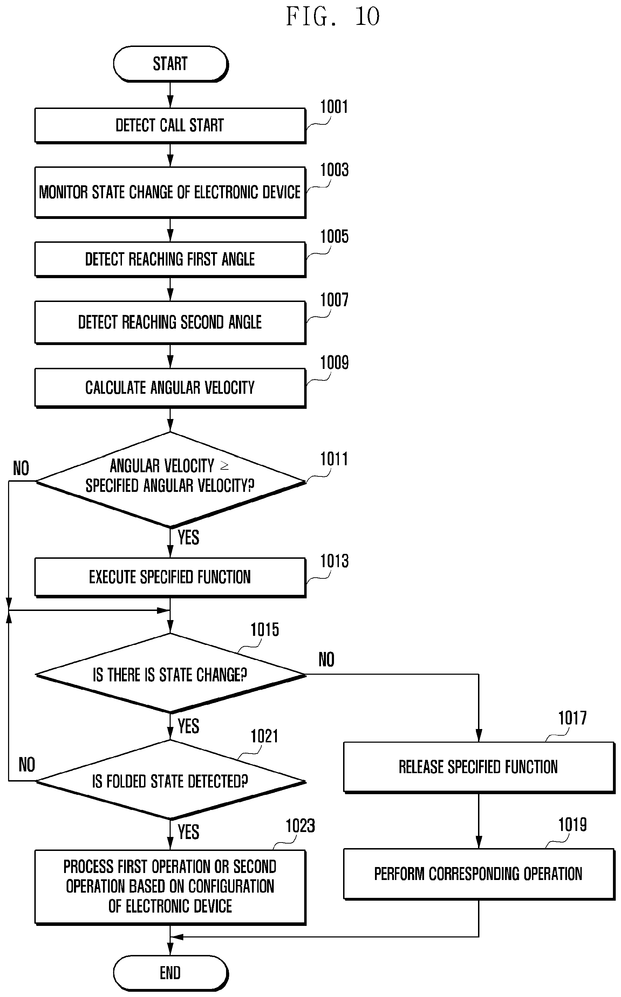

FIG. 10 is a flowchart illustrating an operation method of an electronic device according to an embodiment of the disclosure.

According to an embodiment, FIG. 10 may show an example of supporting the electronic device 101 according to an embodiment to process a designated function when the state thereof changes into a folded state (or in a folding operation) while the electronic device 101 performs a call in an unfolded state. For example, the designated function may include a function (e.g., a mute function or a noise canceling function) for processing (e.g., improving, removing, or reducing) noise introduced into a microphone during a call in the electronic device 101. According to an embodiment, FIG. 10 may illustrate an example of an operation of processing noise during a call using an angle and an angular velocity in the electronic device 101 according to an embodiment of the disclosure.

In the electronic device 101 according to an embodiment of the disclosure, a method of processing noise introduced through a microphone, based on a designated state and/or a state change from the designated state, may be performed according to, for example, the flowchart illustrated in FIG. 10. The flowchart shown in FIG. 10 is only a flowchart according to an embodiment of processing noise in response to a state of the electronic device 101 during a call using the electronic device 101, and at least some operations may be performed in different sequences, may be performed in parallel, or may be performed as independent operations, or at least some other operations may be performed complementary to at least some operations thereof. According to an embodiment of the disclosure, operations 1001 to 1023 may be performed by at least one processor 120 of the electronic device 101.

According to an embodiment, the operations described in FIG. 10 may be heuristically performed in conjunction with, for example, the operations described in FIG. 9, may be heuristically performed in conjunction with at least some other operations by replacing at least some of the described operations, or may be heuristically performed as details of at least some of the described operations.

As shown in FIG. 10, an operation method performed by the electronic device 101 according to an embodiment (e.g., an operation method for supporting processing of noise that may occur during a call in response to the state of the electronic device 101) may include an operation 1001 of detecting a call start, an operation 1003 of monitoring a change in the state of the electronic device 101, an operation 1005 of detecting reaching a first angle, an operation 1007 of detecting reaching a second angle, an operation 1009 of calculating an angular velocity, an operation 1011 of determining whether the angular velocity is greater than or equal to a designated angular velocity, an operation 1013 of executing a designated function, based on determining that the angular velocity is greater than or equal to the designated angular velocity, an operation 1015 of determining whether or not there is a change in the state of the electronic device 101 after executing the designated function or based on determining that the angular velocity is less than the designated angular velocity, an operation 1017 of releasing the designated function, based on determining that there is no change in the state of the electronic device 101, an operation 1019 of processing a corresponding operation, based on the release of the designated function, an operation 1021 of determining whether or not a folded state of the electronic device 101 is detected based on determining that there is a change in the state of the electronic device 101, and an operation 1023 of processing, based on the detection of the folded state of the electronic device 101, a first operation or a second operation, based on the configuration of the electronic device 101.

Referring to FIG. 10, in operation 1001, the processor 120 of the electronic device 101 may detect a call start. According to an embodiment, the processor 120 may receive a user input for initiating a call (e.g., execution of an outgoing call or execution of reception of an incoming call, based on a call application) with an external electronic device from the user. According to an embodiment, the electronic device 101 may determine a call start, based on receiving a user input. According to an embodiment, the user may start a call in the unfolded state of the electronic device 101 (e.g., a first designated state).

In operation 1003, the processor 120 may monitor a change in the state of the electronic device 101. According to an embodiment, the processor 120 may monitor a state change (e.g., a folding operation) from a first designated state to a second designated state (e.g., the intermediate state) of the electronic device 101 during a call.

According to an embodiment, the processor 120 may identify sensor data (e.g., acceleration sensor data and/or gyro sensor data) of the sensor module 176, based on a designated sensor cycle. According to an embodiment, the processor 120 may monitor a change in the angle (e.g., an inflection angle) between the first housing and the second housing of the electronic device 101, based on the sensor data. According to an embodiment, the processor 120 may detect a state change, based on the monitoring result.

According to an embodiment, the processor 120 may recognize an angle (e.g., an inflection angle) between the first housing and the second housing of the electronic device 101, based on the sensor data (e.g., acceleration sensor data and/or gyro sensor data) of the sensor module 176. According to an embodiment, the processor 120 may determine the state change, based on a change in the angle. For example, the processor 120 may determine the state change, based on recognizing a change in the angle from a designated angle (e.g., about 180 degrees corresponding to the unfolded state) to an angle less than the designated angle.

In operation 1005, the processor 120 may detect reaching a first angle. According to an embodiment, the processor 120 may monitor whether or not the angle between the first housing and the second housing reaches a designated first angle according to the state change of the electronic device 101. According to an embodiment, the processor 120 may recognize an angle between the first housing and the second housing by identifying sensor data of the sensor module 176 (e.g., an acceleration sensor) in a designated sensor cycle during a call and determine whether or not the recognized angle reaches a first angle (e.g., about 60 degrees). According to an embodiment, the processor 120, based on reaching the first angle, may execute a designated function in operation 1013.

In operation 1007, the processor 120 may detect reaching a second angle. According to an embodiment, the processor 120 may monitor whether or not the angle between the first housing and the second housing reaches a designated second angle after reaching the first angle according to the state change of the electronic device 101. According to an embodiment, the processor 120 may recognize an angle between the first housing and the second housing by identifying sensor data of the sensor module 176 (e.g., an acceleration sensor) in a designated sensor cycle during a call and determine whether or not the recognized angle reaches a second angle (e.g., about 40 degrees).

In operation 1009, the processor 120 may calculate an angular velocity. According to an embodiment, the processor 120 may determine an angular velocity oat which the angle between the first housing and the second housing changes from the first angle (e.g., about 60 degrees) to the second angle (e.g., 40 degrees).

In operation 1011, the processor 120 may determine whether the calculated angular velocity is greater than or equal to a designated angular velocity (a preconfigured reference angular velocity). According to an embodiment, the processor 120 may compare the calculated angular velocity with a designated angular velocity (e.g., a reference angular velocity). According to an embodiment, the processor 120, based on the comparison result, may determine whether the angular velocity to the second angle (or to less than the second angle) is greater than or equal to a designated angular velocity (e.g., about 0.36 degrees/ms).

The processor 120, based on determining that the angular velocity is less than the designated angular velocity in operation 1011 (e.g., "No" in operation 1011), may proceed to operation 1015 and may process the execution of operation 1015 and operations subsequent thereto. According to an embodiment, if the angular velocity to the second angle or less is less than the designated angular velocity (e.g., about 0.36 degrees/ms), the processor 120 may determine the magnitude of noise generated does not affect the user's call and thus may not perform the call mute function.

The processor 120, based on determining that the angular velocity is greater than or equal to the designated angular velocity in operation 1011 (e.g., "YES" in operation 1011), may execute a designated function in operation 1013. According to an embodiment, the designated function may include a function of processing (e.g., improving, removing, or reducing) noise introduced into a microphone during a call. For example, the designated function may include a mute function and/or a noise canceling function. According to an embodiment, if the angular velocity is greater than or equal to the designated angular velocity, the processor 120 may execute a mute function or a noise canceling function, based on the configuration of the electronic device 101 for processing noise.

In operation 1015, the processor 120 may determine whether there is a change in the state of the electronic device 101. According to an embodiment, the processor 120 may determine whether or not the electronic device 101 remains in the intermediate state, based on whether or not the angle between the first housing and the second housing changes. For example, the processor 120 may determine whether or not the state of the electronic device 101 is changing or whether or not the folding operation of the electronic device 101 has stopped, based on whether or not the angle change satisfies a designated angle change value (e.g., about 1 degree or more). According to an embodiment, if there is no change in the sensor data (e.g., gyro sensor data) of the sensor module 176 (e.g., the gyro sensor) for a predetermined time (e.g., about 500ms), the processor 120 may determine that the folding operation of the electronic device 101 has stopped.

Based on determining that there is no change in the state of the electronic device 101 in operation 1015 (e.g., "NO" in operation 1015), the processor 120 may release the designated function in operation 1017. According to an embodiment, the processor 120 may release the mute function (e.g., unmuting). According to an embodiment, the processor 120 may perform an operation of processing an audio signal input into the microphone, based on the release of the mute function, and transmitting the audio signal to an external electronic device.

According to an embodiment, if the angle change does not satisfy the designated angle change value after execution of the designated function (e.g., execution of a call mute function), the processor 120 may release the executed call mute function (unmuting). For example, if the angle change does not satisfy the designated angle change value after the call mute, the processor 120 may release the call mute function after a designated time (e.g., about 500ms).

In operation 1019, the processor 120 may process execution of a corresponding operation, based on the release of the designated function. According to an embodiment, the processor 120, based on the configuration of the electronic device 101, may proceed to operation 1015 or may determine whether or not to execute a designated function (e.g., a mute function or application of a noise filter), based on a designated condition, and process an operation corresponding to the designated function.

Based on determining that there is a change in the state of the electronic device 101 in operation 1015 (e.g., "YES" in operation 1015), the processor 120 may determine whether or not a folded state of the electronic device 101 is detected in operation 1021. According to an embodiment, the processor 120 may determine whether or not the electronic device 101 is in the folded state, based on sensor data (e.g., inflection angle data or Hall sensor data) of the sensor module 176.

According to an embodiment, the processor 120 may recognize an angle (e.g., an inflection angle) between the first housing and the second housing, based on sensor data (e.g., acceleration sensor data and/or gyro sensor data) of the sensor module 176. According to an embodiment, the processor 120 may determine that the electronic device in the folded state if the angle is recognized as a designated angle (e.g., approximately 0 degrees corresponding to the folded state). According to an embodiment, the processor 120 may recognize the occurrence of a close flag, based on sensor data (e.g., Hall sensor data) of the sensor module 176. According to an embodiment, the processor 120 may determine that the electronic device in the folded state if the occurrence of the close flag is recognized.

Based on not detecting the folded state of the electronic device 101 in operation 1021 (e.g., "NO" in operation 1021), the processor 120 may proceed to operation 1015 and process the execution of operation 1015 and operations subsequent thereto.

Based on detecting the folded state of the electronic device 101 in operation 1021 (e.g., "YES" in operation 1021), the processor 120 may perform a first operation or a second operation, based on the configuration of the electronic device 101, in operation 1023. According to an embodiment, processing of the first operation and the second operation may be determined based on preconfigured configuration information of the electronic device 101.

According to an embodiment, the electronic device 101 may have various configurations depending on the folding operation. For example, configurations related to call control may be supported based on the folding operation of the electronic device 101. For example, a configuration of a function of automatically terminating a call when the state of the electronic device 101 changes from the unfolded state to the folded state during the call may be included. According to an embodiment, if a folded state is detected (e.g., if the second designated condition is satisfied) during a call, the processor 120 may process a first operation of terminating the call connection (e.g., call disconnection), based on a first configuration (e.g., an automatic termination function is configured to be active) of the electronic device 101. According to an embodiment, the processing of the first operation may include a situation in which a call is terminated by an external electronic device connected to the electronic device 101 for a call.

According to an embodiment, when a folded state is detected (e.g., if the second designated condition is satisfied) during a call, the processor 120 may process a second operation of maintaining a call connection by the electronic device 101, based on a second configuration (e.g., an automatic termination function is configured to be inactive) of the electronic device 101, and releasing a mute function (e.g., unmuting) after a designated time elapses. According to an embodiment, the processor 120 may perform an operation of processing an audio signal input into the microphone, based on the release of the mute function, and transmitting the audio signal to the outside.

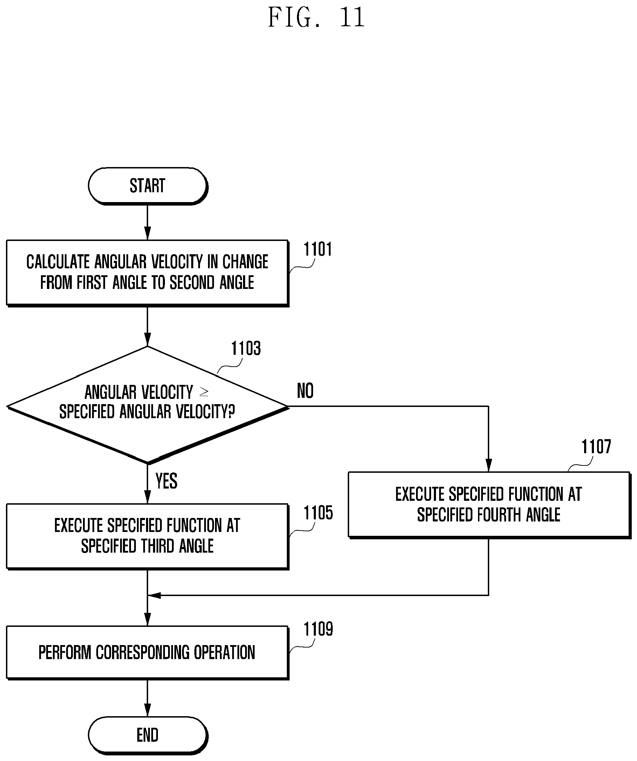

FIG. 11 is a flowchart illustrating an operation method of an electronic device according to an embodiment of the disclosure.

According to an embodiment, FIG. 11 may show an example of supporting the electronic device 101 according to an embodiment to process a designated function when the state thereof changes into a folded state (or in a folding operation) while the electronic device 101 performs a call in an unfolded state. For example, the designated function may include a function (e.g., a mute function or a noise canceling function) for processing (e.g., improving, removing, or reducing) noise introduced into a microphone during a call in the electronic device 101. According to an embodiment, FIG. 11 may illustrate an example of an operation of determining a noise removal time at a designated angle using an angle and an angular velocity in the electronic device 101 according to an embodiment of the disclosure.

In the electronic device 101 according to an embodiment of the disclosure, a method of processing noise introduced through a microphone, based on a designated state and/or a state change from the designated state, may be performed according to, for example, the flowchart illustrated in FIG. 11. The flowchart shown in FIG. 11 is only a flowchart according to an embodiment of processing noise in response to a state of the electronic device 101 during a call using the electronic device 101, and at least some operations may be performed in different sequences, may be performed in parallel, or may be performed as independent operations, or at least some other operations may be performed complementary to at least some operations thereof. According to an embodiment of the disclosure, operations 1101 to 1109 may be performed by at least one processor 120 of the electronic device 101.

According to an embodiment, the operations described in FIG. 11 may be heuristically performed in conjunction with, for example, the operations described in FIGS. 9 to 10, may be heuristically performed in conjunction with at least some other operations by replacing at least some of the described operations, or may be heuristically performed as details of at least some of the described operations. According to an embodiment, in the description with reference to FIG. 11, detailed descriptions of operations corresponding to the operations described in the description with reference to FIG. 10 may be omitted.

As shown in FIG. 11, an operation method performed by the electronic device 101 according to an embodiment (e.g., an operation method for supporting processing of noise that may occur during a call in response to the state of the electronic device 101) may include an operation 1101 of calculating an angular velocity in a change from a first angle to a second angle, an operation 1103 of determining whether the angular velocity is greater than or equal to a designated angular velocity, an operation 1105 of executing a designated function at a designated third angle, based on determining that the angular velocity is greater than or equal to the designated angular velocity, an operation 1107 of executing a designated function at a designated fourth angle, based on determining that the angular velocity is less than the designated angular velocity, and an operation 1109 of processing execution of a corresponding operation.

Referring to FIG. 11, the processor 120 of the electronic device 101 may calculate an angular velocity in a change from a first angle to a second angle in operation 1101. According to an embodiment, the processor 120 may perform an operation of calculating an angular velocity, based on operations corresponding to the descriptions of operations 1001 to 1009 with reference to FIG. 10.

In operation 1103, the processor 120 may determine whether the angular velocity is greater than or equal to a designated angular velocity (e.g., a preconfigured reference angular velocity). According to an embodiment, the processor 120 may compare the calculated angular velocity with a designated angular velocity (e.g., a reference angular velocity). According to an embodiment, the processor 120, based on the comparison result, may determine whether the angular velocity to the second angle (or to less than the second angle) is greater than or equal to a designated angular velocity (e.g., about 0.36 degrees/ms).

The processor 120, based on determining that the angular velocity is greater than or equal to the designated angular velocity in operation 1103 (e.g., "YES" in operation 1103), may execute a designated function at a designated third angle in operation 1105. In an embodiment, the third angle may include an angle less than the second angle. According to an embodiment, if the angular velocity to the second angle or less is greater than or equal to the designated angular velocity (e.g., about 0.36 degrees/ms), the processor 120 may execute a designated function at a third angle (e.g., about 35 degrees) smaller than the second angle (e.g., about 40 degrees). In an embodiment, the designated function may include a call mute function and/or a noise canceling function.

The processor 120, based on determining that the angular velocity is less than the designated angular velocity in operation 1103 (e.g., "NO" in operation 1103), may execute a designated function at a designated fourth angle in operation 1107. In an embodiment, the fourth angle may include an angle smaller than the third angle. According to an embodiment, if the angular velocity to the second angle or less is less than the designated angular velocity (e.g., about 0.36 degrees/ms), the processor 120 may execute a designated function (e.g., a call mute function or a noise canceling function) at a fourth angle (e.g., about 20 degrees) smaller than the third angle (e.g., about 35 degrees).

In operation 1109, the processor 120 may process the execution of a corresponding operation. According to an embodiment, in the case of executing the designated function at the third angle, the processor 120 may release the designated function executed according to the third angle, based on whether or not a designated angle change value from the third angle is satisfied, or perform an operation of detecting a folded state of the electronic device 101. According to an embodiment, in the case of executing the designated function at the fourth angle, the processor 120 may release the designated function executed according to the fourth angle, based on whether or not a designated angle change value from the fourth angle is satisfied, or perform an operation of detecting a folded state of the electronic device 101. According to an embodiment, the processor 120 may process the execution of operations corresponding to the descriptions of operations 1015 to 1023 with reference to FIG. 10.

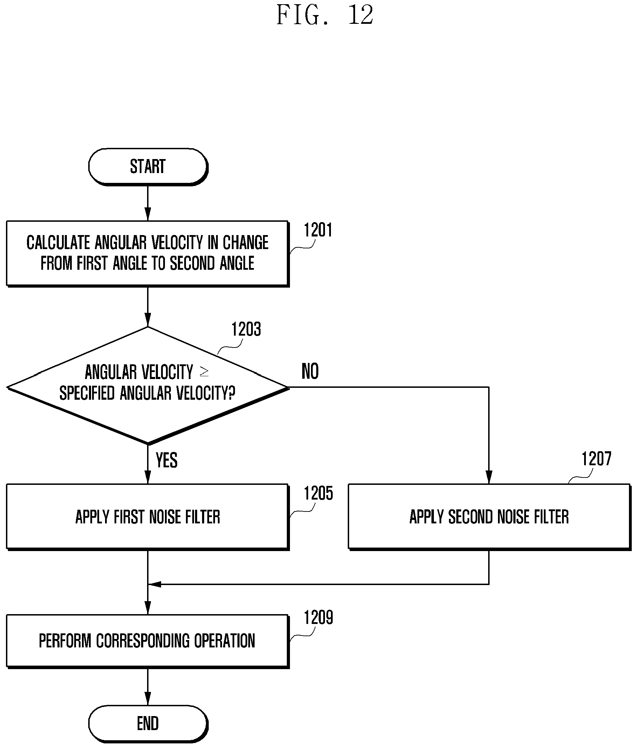

FIG. 12 is a flowchart illustrating an operation method of an electronic device according to an embodiment of the disclosure.

According to an embodiment, FIG. 12 may show an example of supporting the electronic device 101 according to an embodiment to process a designated function when the state thereof changes into a folded state (or in a folding operation) while the electronic device 101 performs a call in an unfolded state. For example, the designated function may include a function (e.g., a mute function or a noise canceling function) for processing (e.g., improving, removing, or reducing) noise introduced into a microphone during a call in the electronic device 101. According to an embodiment, FIG. 12 may illustrate an example of an operation of performing noise canceling by differently applying a noise filter at a designated angle using an angle and an angular velocity in the electronic device 101 according to an embodiment of the disclosure.

In the electronic device 101 according to an embodiment of the disclosure, a method of processing noise introduced through a microphone, based on a designated state and/or a state change from the designated state, may be performed according to, for example, the flowchart illustrated in FIG. 12. The flowchart shown in FIG. 12 is only a flowchart according to an embodiment of processing noise in response to a state of the electronic device 101 during a call using the electronic device 101, and at least some operations may be performed in different sequences, may be performed in parallel, or may be performed as independent operations, or at least some other operations may be performed complementary to at least some operations thereof. According to an embodiment of the disclosure, operations 1201 to 1209 may be performed by at least one processor 120 of the electronic device 101.

According to an embodiment, the operations described in FIG. 12 may be heuristically performed in conjunction with, for example, the operations described in FIGS. 9 to 11, may be heuristically performed in conjunction with at least some other operations by replacing at least some of the described operations, or may be heuristically performed as details of at least some of the described operations. According to an embodiment, in the description with reference to FIG. 12, detailed descriptions of operations corresponding to the operations described in the description with reference to FIGS. 10 to 11 may be omitted.

As shown in FIG. 12, an operation method performed by the electronic device 101 according to an embodiment (e.g., an operation method for supporting processing of noise that may occur during a call in response to the state of the electronic device 101) may include an operation 1201 of calculating an angular velocity in a change from a first angle to a second angle, an operation 1203 of determining whether the angular velocity is greater than or equal to a designated angular velocity, an operation 1205 of applying a designated first noise filter, based on determining that the angular velocity is greater than or equal to the designated angular velocity, an operation 1207 of applying a designated second noise filter, based on determining that the angular velocity is less than the designated angular velocity, and an operation 1209 of processing execution of a corresponding operation.

Referring to FIG. 12, the processor 120 of the electronic device 101 may calculate an angular velocity in a change from a first angle to a second angle in operation 1201. According to an embodiment, the processor 120 may perform an operation of calculating an angular velocity, based on operations corresponding to the descriptions of operations 1001 to 1009 with reference to FIG. 10.

**In** operation 1203, the processor 120 may determine whether the angular velocity is greater than or equal to a designated angular velocity (e.g., a preconfigured reference angular velocity). The designated angular velocity may be the same as, or different to, the designated angular velocity described in relation to FIG. 11. According to an embodiment, the processor 120 may compare the calculated angular velocity with a designated angular velocity (e.g., a reference angular velocity). According to an embodiment, the processor 120, based on the comparison result, may determine whether the angular velocity to the second angle (or to less than the second angle) is greater than or equal to a designated angular velocity (e.g., about 0.36 degrees/ms).

The processor 120, based on determining that the angular velocity is greater than or equal to the designated angular velocity in operation 1203 (e.g., "YES" in operation 1203), may apply a designated first noise filter in operation 1205. According to an embodiment, the processor 120 may execute noise canceling as a designated function. According to an embodiment, the processor 120 may perform noise cancellation using the first noise filter. According to an embodiment, the processor 120 may change a default noise filter applied for noise cancellation during a call into a first noise filter corresponding to noise of a corresponding angular velocity and apply the same.

The processor 120, based on determining that the angular velocity is less than the designated angular velocity in operation 1203 (e.g., "NO" in operation 1203), may apply a designated second noise filter in operation 1207. According to an embodiment, the processor 120 may execute noise canceling as a designated function. According to an embodiment, the processor 120 may perform noise cancellation using the second noise filter. According to an embodiment, the processor 120 may change a default noise filter applied for noise cancellation during a call into a second noise filter corresponding to noise of a corresponding angular velocity and apply the same.

According to an embodiment, as the angular velocity increases (e.g., as a change rate increases), a relatively high-frequency noise pattern (e.g., a noise pattern having a large high-frequency component) may be generated, and as the angular velocity is reduced (e.g., as a change rate is reduced), a relatively low-frequency noise pattern (e.g., a noise pattern having a small high-frequency component) may be generated. According to an embodiment, the electronic device 101 may pre-store noise images (or noise patterns) generated depending on the angular velocity and, if a sound similar to a corresponding noise image is input through a microphone, remove noise corresponding to the noise image, thereby transmitting the audio signal. For example, noise may vary depending on the angular velocity according to a folding operation of the electronic device 101, and a noise filter may be applied to each noise corresponding to each of various angular velocities.

**In** operation 1209, the processor 120 may process the execution of a corresponding operation. According to an embodiment, in the case of applying the first noise filter or the second noise filter, the processor 120 may release the applied noise filter (e.g., change the noise filter to the default noise filter and then apply the same, or bypass an audio signal input to the microphone without noise canceling), based on whether or not a designated angle change value from the second angle is satisfied, or perform an operation of detecting a folded state of the electronic device 101. According to an embodiment, the processor 120 may process the execution of operations corresponding to the descriptions of operations 1015 to 1023 with reference to FIG. 10.

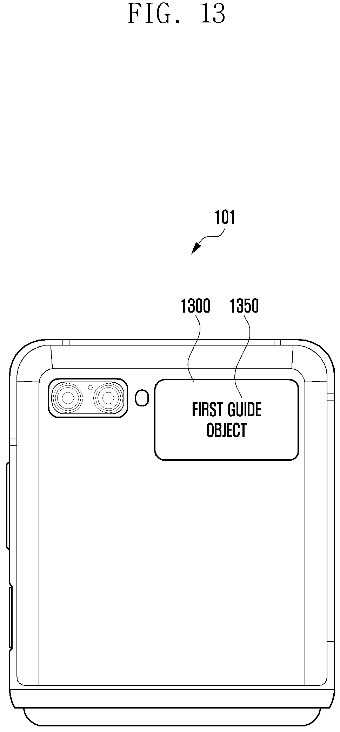

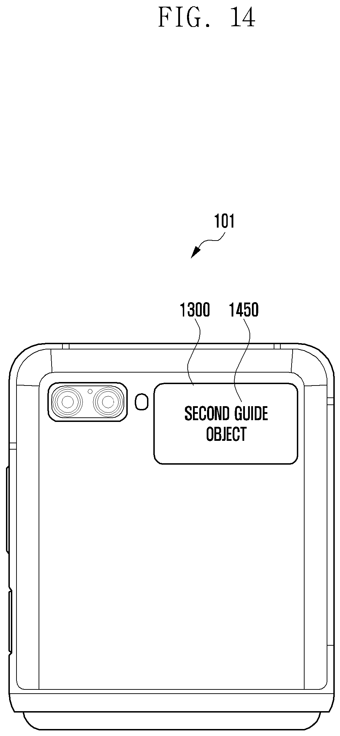

FIG. 13 is a diagram illustrating an example of a user interface supported by an electronic device according to an embodiment of the disclosure. FIG. 14 is a diagram illustrating an example of a user interface supported by an electronic device according to an embodiment of the disclosure.

According to an embodiment, FIGS. 13 and 14 may show an example in which a display 1300 (e.g., the display module 160 in FIG. 1) operates according to a processing function in response to the state of the electronic device 101 during a call of the electronic device 101. According to an embodiment, in FIGS. 13 and 14, the electronic device 101 may be entering the folded state according to a folding operation, operate in the intermediate state, or operate in the folded state, and the display 1300 may indicate a display (e.g., a cover display or a secondary display) on the rear surface of the electronic device 101.

Referring to FIG. 13, FIG. 13 may illustrate an example of a first user interface through which the electronic device 101 provides the user with a guide (or notification) of execution of a designated function during a folding operation. As shown in FIG. 13, the electronic device 101 may output a first guide object 1350 through the display 1300. According to an embodiment, the processor 120 may visually provide a first guide object 1350 (e.g., text, an image, and/or an animation) indicating a guide for execution of a designated function (e.g., noise processing by executing a mute function or noise canceling function) through the display 1300. For example, the first guide object 1350 may include information related to call mute. The first guide object 1350 may be an object for informing a user that the designated function is being executed during the call. The user may turn on or turn off the execution of the designated function by providing a user input on the first guide object 1350.

Referring to FIG. 14, FIG. 14 may illustrate an example of a second user interface providing the user with a guide (or notification) of a call end, based on the case where the electronic device 101 enters a folded state during the operation in FIG. 13 so that the call is terminated or the case where a call is terminated by the user or external electronic device in the state in which the electronic device 101 operates as shown in FIG. 13. As shown in FIG. 14, the electronic device 101 may output a second guide object 1450 through the display 1300. According to an embodiment, the processor 120 may visually provide a second guide object 1450 (e.g., text, an image, and/or an animation) indicating a guide for a call end through the display 1300. For example, the second guide object 1450 may include information related to the call end or call disconnection. The second guide object 1450 may provide an indication to the user that the call has been terminated or disconnected as a result of the electronic device 101 entering the folded state. Advantageously, this allows the user to be aware of the reason for the call end.

According to an embodiment, the electronic device 101 may control the display 1300 to provide a user interface including a first guide object 1350 related to call mute in response to execution of a designated function according to the state of the electronic device 101 during a call. According to an embodiment, in response to the occurrence of a call end, the electronic device 101 may control the display 1300 to convert the first guide object 1350 to the second guide object 1450 and provide a user interface including the second guide object 1450. According to an embodiment, the first guide object 1350 and the second guide object 1450 may be displayed for a designated period of time through the display 1300 assuming that no other operation is performed in the electronic device 101. After the designated period of time has passed, the display 1300 may stop displaying the first guide object 1350 and/or the second guide object 1450.

An operation method of an electronic device 101 according to an embodiment of the disclosure may include monitoring a state change of the electronic device 101, based on detecting a call start in a designated state of the electronic device 101, executing a designated function, based on determining that the state change of the electronic device 101 satisfies a first designated condition, processing an audio signal, based on the designated function, and, based on determining that the state change of the electronic device 101 satisfies a second designated condition, processing a first operation or a second operation, based on a configuration of the electronic device 101.

According to an embodiment, the designated function may include a mute function or a noise canceling function for processing noise introduced into the microphone during a call.

According to an embodiment, the monitoring may include monitoring a state change in which the electronic device changes from a first designated state to a second designated state, based on a sensor circuit, during a call and recognizing an angle change in which an angle between a first housing and a second housing of the electronic device changes into an angle smaller than a designated angle corresponding to the designated state, based on a result of the monitoring.

According to an embodiment, the first designated condition may include a first angle designated to trigger processing of noise introduced from the microphone during a call and a designated angular velocity at which the first angle changes to a second angle designated to execute noise processing. According to an embodiment, the second designated condition may include a state in which the electronic device switches to a third designated state.

According to an embodiment, the determining of the first designated condition may include calculating an angular velocity from the first angle to the second angle when the angle between the first housing and the second housing reaches the first angle, and determining whether or not the first designated condition is satisfied based on whether or not the angular velocity to the second angle is greater than or equal to a designated angular velocity.

According to an embodiment, the method may include processing a first operation of terminating a call connection according to a first configuration of the electronic device, based on determining that the second designated condition is satisfied. According to an embodiment, the method may include processing, based on determining that the second designated condition is satisfied, a second operation of releasing the designated function when a predetermined period of time elapses while maintaining a call connection based on a second configuration of the electronic device.

The various embodiments of the disclosure disclosed in the specification and drawings are presented only as specific examples to easily explain the technical content of the disclosure and help understanding of the disclosure, and are not intended to limit the scope of the disclosure. Therefore, the scope of the disclosure should be construed as including **all** changes or modifications derived based on the embodiments disclosed herein provided they fall under the scope of the appended claims..

It will be appreciated that the above-described embodiments, and their technical features, may be combined with one another in each and every combination, potentially unless there is a conflict between two embodiments or features. That is, each and every combination of two or more of the above-described embodiments is envisaged and included within the present disclosure provided it falls under the scope of the appended claims. One or more features from any embodiment may be incorporated in any other embodiment, and provide a corresponding advantage or advantages.

## Claims

1. A foldable electronic device (101) comprising:
a first housing (310);
a second housing (320);
a hinge module coupled to the first housing and the second housing;
a communication circuit (190);
a sensor circuit (176);
a microphone (303);
a processor (120) operatively connected to the sensor circuit and the microphone; and
memory (130) storing instructions that, when executed by the processor, cause the foldable electronic device to:
detect (901) a call start while the foldable electronic device is in an unfolded state;
monitor (903), using the sensor circuit, a state change in which the foldable electronic device changes from the unfolded state to a designated state, while performing a call in the unfolded state, wherein an angle between the first housing and the second housing is smaller in the designated state of the foldable electronic device than in the unfolded state of the foldable electronic device;
determine (907) whether the state change of the foldable electronic device satisfies a first designated condition;
execute (909) a mute function for processing an audio signal introduced into the microphone, based on determining that the state change of the foldable electronic device satisfies the first designated condition;
process (911) the audio signal, based on the mute function to prevent the audio signal from being transmitted to an external electronic device connected to the foldable electronic device through the communication circuit;
determine (913) whether the state change of the foldable electronic device satisfies a second designated condition; and
process (915) a first operation of terminating a call connection or a second operation of maintaining the call connection and releasing the mute function according to a configuration of the foldable electronic device, based on determining that the state change of the foldable electronic device satisfies the second designated condition,
wherein the first operation is processed based on a first configuration of the foldable electronic device that an automatic termination function is configured to be activated, and the second operation is processed based on a second configuration of the foldable electronic device that the automatic termination function is configured to be inactivated.

2. The foldable electronic device (101) of claim 1, wherein the first designated condition comprises a first angle designated to trigger processing of noise introduced from the microphone (303) during a call and a designated angular velocity at which the first angle changes to a second angle designated to execute noise processing.

3. The foldable electronic device (101) of claim 2, wherein the instructions, when executed by the processor (120), cause the foldable electronic device to:
in response to the angle between the first housing and the second housing reaching the first angle, start a timer to determine a time taken for the angle between the first housing and
the second housing to change from the first angle to the second angle, calculate an angular velocity from the first angle to the second angle based on a result of the timer; and
determine whether the first designated condition is satisfied, based on whether the angular velocity to the second angle is greater than or equal to a designated angular velocity.

4. The foldable electronic device (101) of any of the preceding claims, wherein the second designated condition comprises a state in which the foldable electronic device switches to a third designated state.

5. The foldable electronic device (101) of any of the preceding claims, wherein the instructions, when executed by the processor (120), cause the foldable electronic device to:
detect reaching the first angle;
detect reaching a second angle;
calculate an angular velocity in a change from the first angle to the second angle;
determine whether the angular velocity is greater than or equal to a designated angular velocity; and
execute the mute function, based on determining that the angular velocity is greater than or equal to the designated angular velocity.

6. The foldable electronic device (101) of any of claims 1 to 5, wherein the instructions, when executed by the processor (120), cause the foldable electronic device to:
detect reaching the first angle;
detect reaching a second angle;
calculate an angular velocity in a change from the first angle to the second angle;
determine whether the angular velocity is greater than or equal to a designated angular velocity;
execute the mute function at a designated third angle, based on determining that the angular velocity is greater than or equal to the designated angular velocity; and
execute the mute function at a designated fourth angle, based on determining that the angular velocity is less than the designated angular velocity,
wherein the third angle comprises an angle smaller than the second angle, and
wherein the fourth angle comprises an angle smaller than the third angle.

7. The foldable electronic device (101) of any of claims 1 to 5, wherein the instructions, when executed by the processor (120), cause the foldable electronic device to:
detect reaching the first angle;
detect reaching a second angle;
calculate an angular velocity in a change from the first angle to the second angle;
determine whether the angular velocity is greater than or equal to a designated angular velocity;
perform, based on determining that the angular velocity is greater than or equal to the designated angular velocity, noise cancelling based on application of a designated first noise filter; and
perform, based on determining that the angular velocity is less than the designated angular velocity, noise cancelling based on application of a designated second noise filter.

8. The foldable electronic device (101) of any of the preceding claims, wherein the instructions, when executed by the processor (120), cause the foldable electronic device to:
execute the mute function;
determine whether there is a state change of the foldable electronic device; and
release the mute function, based on determining that there is no state change.

9. The foldable electronic device (101) of any of the preceding claims, wherein the instructions, when executed by the processor (120), cause the foldable electronic device to:
control a display to display a user interface comprising a first guide object related to call mute in response to execution of the mute function during the call; and
in response to a call end, control the display to convert the first guide object into a second guide object and display a user interface including the second guide object.

10. An operation method of a foldable electronic device (101) wherein the foldable electronic device comprises a first housing (310), a second housing (320), and a hinge module coupled to the first housing and the second housing, the method comprising:
detecting (901) a call start while the foldable electronic device is in a unfolded state;
monitoring (903), using a sensor circuit, a state change in which the foldable electronic device changes from the unfolded state to a designated state, while performing a call in the unfolded state, wherein an angle between the first housing and the second housing is smaller in the designated state of the foldable electronic device than in the unfolded state of the foldable electronic device;
determining (907) whether the state change of the foldable electronic device satisfies a first designated condition;
executing (909) a mute function for processing an audio signal introduced into a microphone (303), based on determining that the state change of the foldable electronic device satisfies the first designated condition;
processing (911) the audio signal, based on the mute function to prevent the audio signal from being transmitted to an external electronic device connected to the foldable electronic device through a communication circuit;
determine (913) whether the state change of the foldable electronic device satisfies a second designated condition; and
processing (915) a first operation of terminating a call connection or a second operation of maintaining the call connection and releasing the mute function according to a configuration of the foldable electronic device, based on determining that the state change of the foldable electronic device satisfies the second designated condition,
wherein the first operation is processed based on a first configuration of the foldable electronic device that an automatic termination function is configured to be activated, and the second operation is processed based on a second configuration of the foldable electronic device that the automatic termination function is configured to be inactivated.

## Patentansprüche

1. Klappbare elektronische Vorrichtung (101), umfassend:
ein erstes Gehäuse (310);
ein zweites Gehäuse (320);
ein Scharniermodul, das an das erste Gehäuse und das zweite Gehäuse gekoppelt ist;
eine Kommunikationsschaltung (190);
eine Sensorschaltung (176);
ein Mikrofon (303);
einen Prozessor (120), der operativ mit der Sensorschaltung und dem Mikrofon verbunden ist; und
einen Speicher (130), der Anweisungen speichert, die, wenn von dem Prozessor ausgeführt, die klappbare elektronische Vorrichtung zu Folgendem veranlassen:
Detektieren (901) eines Anrufbeginns, während sich die klappbare elektronische Vorrichtung in einem aufgeklappten Zustand befindet;
Überwachen (903), unter Verwendung der Sensorschaltung, einer Zustandsänderung, bei der sich die klappbare elektronische Vorrichtung von dem aufgeklappten Zustand in einen designierten Zustand abändert, während ein Anruf in dem aufgeklappten Zustand durchgeführt wird, wobei ein Winkel zwischen dem ersten Gehäuse und dem zweiten Gehäuse in dem designierten Zustand der klappbaren elektronischen Vorrichtung kleiner ist als in dem aufgeklappten Zustand der klappbaren elektronischen Vorrichtung;
Bestimmen (907), ob die Zustandsänderung der klappbaren elektronischen Vorrichtung eine erste designierte Bedingung erfüllt;
Ausführen (909) einer Stummschaltungsfunktion zum Verarbeiten eines in das Mikrofon eingeführten Audiosignals, basierend auf dem Bestimmen dessen, dass die Zustandsänderung der klappbaren elektronischen Vorrichtung die erste designierte Bedingung erfüllt;
Verarbeiten (911) des Audiosignals, basierend auf der Stummschaltungsfunktion, um zu verhindern, dass das Audiosignal durch die Kommunikationsschaltung an eine externe elektronische Vorrichtung übertragen wird, die mit der klappbaren elektronischen Vorrichtung verbunden ist;
Bestimmen (913), ob die Zustandsänderung der klappbaren elektronischen Vorrichtung eine zweite designierte Bedingung erfüllt; und
Verarbeiten (915) eines ersten Vorgangs des Beendens einer Anrufverbindung oder eines zweiten Vorgangs des Aufrechterhaltens der Anrufverbindung und Freigebens der Stummschaltungsfunktion gemäß einer Konfiguration der klappbaren elektronischen Vorrichtung, basierend auf dem Bestimmen dessen, dass die Zustandsänderung der klappbaren elektronischen Vorrichtung die zweite designierte Bedingung erfüllt,
wobei der erste Vorgang basierend auf einer ersten Konfiguration der klappbaren elektronischen Vorrichtung verarbeitet wird, dass eine automatische Beendigungsfunktion dazu konfiguriert ist, aktiviert zu werden, und der zweite Vorgang basierend auf einer zweiten Konfiguration der klappbaren elektronischen Vorrichtung verarbeitet wird, dass die automatische Beendigungsfunktion dazu konfiguriert ist, inaktiviert zu werden.

2. Klappbare elektronische Vorrichtung (101) nach Anspruch 1,
wobei die erste designierte Bedingung einen ersten Winkel, der dazu designiert ist, eine Verarbeitung des Rauschens auszulösen, das von dem Mikrofon (303) während eines Anrufs eingeführt wird, und eine designierte Winkelgeschwindigkeit umfasst, bei der sich der erste Winkel in einen zweiten Winkel abändert, der dazu designiert ist, eine Rauschverarbeitung auszuführen.

3. Klappbare elektronische Vorrichtung (101) nach Anspruch 2, wobei die Anweisungen, wenn von dem Prozessor (120) ausgeführt, die klappbare elektronische Vorrichtung zu Folgendem veranlassen:
als Reaktion darauf, dass der Winkel zwischen dem ersten Gehäuse und dem zweiten Gehäuse den ersten Winkel erreicht, Starten eines Timers, um eine Zeit zu bestimmen, die von dem Winkel zwischen dem ersten Gehäuse und dem zweiten Gehäuse beansprucht wird, um sich von dem ersten Winkel in dem zweiten Winkel abzuändern, Berechnen einer Winkelgeschwindigkeit von dem ersten Winkel zu dem zweiten Winkel basierend auf einem Ergebnis des Timers; und
Bestimmen, ob die erste designierte Bedingung erfüllt ist, basierend darauf, ob die Winkelgeschwindigkeit zu dem zweiten Winkel größer als eine designierte Winkelgeschwindigkeit oder gleich dieser ist.

4. Klappbare elektronische Vorrichtung (101) nach einem der vorhergehenden Ansprüche, wobei der zweite designierte Zustand einen Zustand umfasst, in dem die klappbare elektronische Vorrichtung in einen dritten designierten Zustand umschaltet.

5. Klappbare elektronische Vorrichtung (101) nach einem der vorhergehenden Ansprüche, wobei die Anweisungen, wenn von dem Prozessor (120) ausgeführt, die klappbare elektronische Vorrichtung zu Folgendem veranlassen:
Detektieren des Erreichens des ersten Winkels;
Detektieren des Erreichens eines zweiten Winkels;
Berechnen einer Winkelgeschwindigkeit bei einer Abänderung von dem ersten Winkel in den zweiten Winkel;
Bestimmen, ob die Winkelgeschwindigkeit größer als eine designierte Winkelgeschwindigkeit oder gleich dieser ist; und
Ausführen der Stummschaltungsfunktion, basierend auf dem Bestimmen dessen, dass die Winkelgeschwindigkeit größer als die designierte Winkelgeschwindigkeit oder gleich dieser ist.

6. Klappbare elektronische Vorrichtung (101) nach Anspruch 1 bis 5, wobei die Anweisungen, wenn von dem Prozessor (120) ausgeführt, die klappbare elektronische Vorrichtung zu Folgendem veranlassen:
Detektieren des Erreichens des ersten Winkels;
Detektieren des Erreichens eines zweiten Winkels;
Berechnen einer Winkelgeschwindigkeit bei einer Abänderung von dem ersten Winkel in den zweiten Winkel;
Bestimmen, ob die Winkelgeschwindigkeit größer als eine designierte Winkelgeschwindigkeit oder gleich dieser ist; und
Ausführen der Stummschaltungsfunktion bei einem designierten dritten Winkel, basierend auf dem Bestimmen dessen, dass die Winkelgeschwindigkeit größer als die designierte Winkelgeschwindigkeit oder gleich dieser ist; und
Ausführen der Stummschaltungsfunktion bei einem designierten vierten Winkel, basierend auf dem Bestimmen dessen, dass die Winkelgeschwindigkeit weniger als die designierte Winkelgeschwindigkeit ist,
wobei der dritte Winkel einen Winkel umfasst, der kleiner als der zweite Winkel ist, und
wobei der vierte Winkel einen Winkel umfasst, der kleiner als der dritte Winkel ist.

7. Klappbare elektronische Vorrichtung (101) nach Anspruch 1 bis 5, wobei die Anweisungen, wenn von dem Prozessor (120) ausgeführt, die klappbare elektronische Vorrichtung zu Folgendem veranlassen:
Detektieren des Erreichens des ersten Winkels;
Detektieren des Erreichens eines zweiten Winkels;
Berechnen einer Winkelgeschwindigkeit bei einer Abänderung von dem ersten Winkel in den zweiten Winkel;
Bestimmen, ob die Winkelgeschwindigkeit größer als eine designierte Winkelgeschwindigkeit oder gleich dieser ist; und
Durchführen, basierend auf dem Bestimmen dessen, dass die Winkelgeschwindigkeit größer als die designierte Winkelgeschwindigkeit oder gleich dieser ist, einer Geräuschunterdrückung basierend auf der Anwendung eines designierten ersten Rauschfilters; und
Durchführen, basierend auf dem Bestimmen dessen, dass die Winkelgeschwindigkeit weniger als die designierte Winkelgeschwindigkeit ist, einer Geräuschunterdrückung basierend auf der Anwendung eines designierten zweiten Rauschfilters.

8. Klappbare elektronische Vorrichtung (101) nach einem der vorhergehenden Ansprüche, wobei die Anweisungen, wenn von dem Prozessor (120) ausgeführt, die klappbare elektronische Vorrichtung zu Folgendem veranlassen:
Ausführen der Stummschaltungsfunktion;
Bestimmen, ob eine Zustandsänderung der klappbaren elektronischen Vorrichtung vorliegt; und
Freigeben der Stummschaltungsfunktion, basierend auf dem Bestimmen dessen, dass keine Zustandsänderung vorliegt.

9. Klappbare elektronische Vorrichtung (101) nach einem der vorhergehenden Ansprüche, wobei die Anweisungen, wenn von dem Prozessor (120) ausgeführt, die klappbare elektronische Vorrichtung zu Folgendem veranlassen:
Steuern einer Anzeige zum Anzeigen einer Benutzeroberfläche, umfassend ein erstes Führungsobjekt, das sich auf die Anrufstummschaltung als Reaktion auf die Ausführung der Stummschaltungsfunktion während des Anrufs bezieht; und
als Reaktion auf ein Anrufende, Steuern der Anzeige, um das erste Führungsobjekt in ein zweites Führungsobjekt umzuwandeln und eine Benutzeroberfläche beinhaltend das zweite Führungsobjekt anzuzeigen.

10. Betriebsverfahren einer klappbaren elektronischen Vorrichtung (101), wobei die klappbare elektronische Vorrichtung ein erstes Gehäuse (310), ein zweites Gehäuse (320) und ein Scharniermodul, das an das erste Gehäuse und das zweite Gehäuse gekoppelt ist, umfasst, wobei das Verfahren umfasst:
Detektieren (901) eines Anrufbeginns, während sich die klappbare elektronische Vorrichtung in einem aufgeklappten Zustand befindet;
Überwachen (903), unter Verwendung der Sensorschaltung, einer Zustandsänderung, bei der sich die klappbare elektronische Vorrichtung von dem aufgeklappten Zustand in einen designierten Zustand abändert, während ein Anruf in dem aufgeklappten Zustand durchgeführt wird, wobei ein Winkel zwischen dem ersten Gehäuse und dem zweiten Gehäuse in dem designierten Zustand der klappbaren elektronischen Vorrichtung kleiner ist als in dem aufgeklappten Zustand der klappbaren elektronischen Vorrichtung;
Bestimmen (907), ob die Zustandsänderung der klappbaren elektronischen Vorrichtung eine erste designierte Bedingung erfüllt;
Ausführen (909) einer Stummschaltungsfunktion zum Verarbeiten eines in das Mikrofon (303) eingeführten Audiosignals, basierend auf dem Bestimmen dessen, dass die Zustandsänderung der klappbaren elektronischen Vorrichtung die erste designierte Bedingung erfüllt;
Verarbeiten (911) des Audiosignals, basierend auf der Stummschaltungsfunktion, um zu verhindern, dass das Audiosignal durch die Kommunikationsschaltung an eine externe elektronische Vorrichtung übertragen wird, die mit der klappbaren elektronischen Vorrichtung verbunden ist;
Bestimmen (913), ob die Zustandsänderung der klappbaren elektronischen Vorrichtung eine zweite designierte Bedingung erfüllt; und
Verarbeiten (915) eines ersten Vorgangs des Beendens einer Anrufverbindung oder eines zweiten Vorgangs des Aufrechterhaltens der Anrufverbindung und Freigebens der Stummschaltungsfunktion gemäß einer Konfiguration der klappbaren elektronischen Vorrichtung, basierend auf dem Bestimmen dessen, dass die Zustandsänderung der klappbaren elektronischen Vorrichtung die zweite designierte Bedingung erfüllt,
wobei der erste Vorgang basierend auf einer ersten Konfiguration der klappbaren elektronischen Vorrichtung verarbeitet wird, dass eine automatische Beendigungsfunktion dazu konfiguriert ist, aktiviert zu werden, und der zweite Vorgang basierend auf einer zweiten Konfiguration der klappbaren elektronischen Vorrichtung verarbeitet wird, dass die automatische Beendigungsfunktion dazu konfiguriert ist, inaktiviert zu werden.

## Revendications

1. Dispositif électronique pliable (101) comprenant :
un premier boîtier (310) ;
un second boîtier (320) ;
un module de charnière couplé au premier boîtier et au second boîtier ;
un circuit de communication (190) ;
un circuit de capteur (176) ;
un microphone (303) ;
un processeur (120) connecté de manière opérationnelle au circuit de capteur et au microphone ; et
une mémoire (130) stockant des instructions qui, lorsqu'elles sont exécutées par le processeur, amènent le dispositif électronique pliable à :
détecter (901) un début d'appel pendant que le dispositif électronique pliable est dans un état déplié ;
surveiller (903), à l'aide du circuit de capteur, un changement d'état dans lequel le dispositif électronique pliable passe de l'état déplié à un état désigné, tout en effectuant un appel dans l'état déplié, dans lequel un angle entre le premier boîtier et le second boîtier est plus petit dans l'état désigné du dispositif électronique pliable que dans l'état déplié du dispositif électronique pliable ;
déterminer (907) si le changement d'état du dispositif électronique pliable satisfait à une première condition désignée ;
exécuter (909) une fonction de mise en sourdine pour traiter un signal audio introduit dans le microphone, sur la base de la détermination que le changement d'état du dispositif électronique pliable satisfait à la première condition désignée ;
traiter (911) le signal audio, sur la base de la fonction de mise en sourdine pour empêcher le signal audio d'être transmis à un dispositif électronique externe connecté au dispositif électronique pliable par l'intermédiaire du circuit de communication ;
déterminer (913) si le changement d'état du dispositif électronique pliable satisfait à une deuxième condition désignée ; et
traiter (915) une première opération d'arrêt d'une connexion d'appel ou une deuxième opération de maintien de la connexion d'appel et de libération de la fonction de mise en sourdine en fonction d'une configuration du dispositif électronique pliable, sur la base de la détermination que le changement d'état du dispositif électronique pliable satisfait à la deuxième condition désignée,
dans lequel la première opération est traitée sur la base d'une première configuration du dispositif électronique pliable dans laquelle une fonction d'arrêt automatique est configurée pour être activée, et la deuxième opération est traitée sur la base d'une deuxième configuration du dispositif électronique pliable dans laquelle la fonction d'arrêt automatique est configurée pour être inactivée.

2. Dispositif électronique pliable (101) selon la revendication 1, dans lequel la première condition désignée comprend un premier angle désigné pour déclencher le traitement du bruit introduit à partir du microphone (303) pendant un appel et une vitesse angulaire désignée à laquelle le premier angle passe à un deuxième angle désigné pour exécuter le traitement du bruit.

3. Dispositif électronique pliable (101) selon la revendication 2, dans lequel les instructions, lorsqu'elles sont exécutées par le processeur (120), amènent le dispositif électronique pliable à :
en réponse au fait que l'angle entre le premier boîtier et le second boîtier atteigne le premier angle, démarrer une minuterie pour déterminer un temps pris pour que l'angle entre le premier boîtier et le second boîtier passe du premier angle au deuxième angle,
calculer une vitesse angulaire du premier angle au deuxième angle sur la base d'un résultat de la minuterie ; et
déterminer si la première condition désignée est satisfaite, sur la base du fait que la vitesse angulaire jusqu'au deuxième angle soit ou ne soit pas supérieure ou égale à une vitesse angulaire désignée.

4. Dispositif électronique pliable (101) selon l'une quelconque des revendications précédentes, dans lequel la deuxième condition désignée comprend un état dans lequel le dispositif électronique pliable passe à un troisième état désigné.

5. Dispositif électronique pliable (101) selon l'une quelconque des revendications précédentes, dans lequel les instructions, lorsqu'elles sont exécutées par le processeur (120), amènent le dispositif électronique pliable à :
détecter l'atteinte du premier angle ;
détecter l'atteinte d'un deuxième angle ;
calculer une vitesse angulaire lors d'un passage du premier angle au deuxième angle ;
déterminer si la vitesse angulaire est supérieure ou égale à une vitesse angulaire désignée ; et
exécuter la fonction de mise en sourdine, sur la base de la détermination du fait que la vitesse angulaire est supérieure ou égale à la vitesse angulaire désignée.

6. Dispositif électronique pliable (101) selon l'une quelconque des revendications 1 à 5, dans lequel les instructions, lorsqu'elles sont exécutées par le processeur (120), amènent le dispositif électronique pliable à :
détecter l'atteinte du premier angle ;
détecter l'atteinte d'un deuxième angle ;
calculer une vitesse angulaire lors d'un passage du premier angle au deuxième angle ;
déterminer si la vitesse angulaire est supérieure ou égale à une vitesse angulaire désignée ;
exécuter la fonction de mise en sourdine à un troisième angle désigné, sur la base de la détermination du fait que la vitesse angulaire est supérieure ou égale à la vitesse angulaire désignée ; et
exécuter la fonction de mise en sourdine à un quatrième angle désigné, sur la base de la détermination que la vitesse angulaire est inférieure à la vitesse angulaire désignée,
dans lequel le troisième angle comprend un angle inférieur au deuxième angle, et
dans lequel le quatrième angle comprend un angle inférieur au troisième angle.

7. Dispositif électronique pliable (101) selon l'une quelconque des revendications 1 à 5, dans lequel les instructions, lorsqu'elles sont exécutées par le processeur (120), amènent le dispositif électronique pliable à :
détecter l'atteinte du premier angle ;
détecter l'atteinte d'un deuxième angle ;
calculer une vitesse angulaire lors d'un passage du premier angle au deuxième angle ;
déterminer si la vitesse angulaire est supérieure ou égale à une vitesse angulaire désignée ;
effectuer, sur la base de la détermination que la vitesse angulaire est supérieure ou égale à la vitesse angulaire désignée, l'annulation du bruit sur la base de l'application d'un premier filtre de bruit désigné ; et
effectuer, sur la base de la détermination que la vitesse angulaire est inférieure à la vitesse angulaire désignée, l'annulation du bruit sur la base de l'application d'un second filtre de bruit désigné.

8. Dispositif électronique pliable (101) selon l'une quelconque des revendications précédentes, dans lequel les instructions, lorsqu'elles sont exécutées par le processeur (120), amènent le dispositif électronique pliable à :
exécuter la fonction de mise en sourdine ;
déterminer s'il y a un changement d'état du dispositif électronique pliable ; et
libérer la fonction de mise en sourdine, sur la base de la détermination qu'il n'y a pas de changement d'état.

9. Dispositif électronique pliable (101) selon l'une quelconque des revendications précédentes, dans lequel les instructions, lorsqu'elles sont exécutées par le processeur (120), amènent le dispositif électronique pliable à :
commander à un affichage d'afficher une interface utilisateur comprenant un premier objet de guidage relatif à la mise en sourdine d'appel en réponse à l'exécution de la fonction de mise en sourdine pendant l'appel ; et
en réponse à une fin d'appel, commander à l'affichage de convertir le premier objet de guidage en un second objet de guidage et afficher une interface utilisateur comprenant le second objet de guidage.

10. Procédé de fonctionnement d'un dispositif électronique pliable (101) dans lequel le dispositif électronique pliable comprend un premier boîtier (310), un second boîtier (320) et un module de charnière couplé au premier boîtier et au second boîtier, le procédé comprenant :
la détection (901) d'un début d'appel pendant que le dispositif électronique pliable est dans un état déplié ;
la surveillance (903), à l'aide d'un circuit de capteur, d'un changement d'état dans lequel le dispositif électronique pliable passe de l'état déplié à un état désigné, tout en effectuant un appel dans l'état déplié, dans lequel un angle entre le premier boîtier et le second boîtier est plus petit dans l'état désigné du dispositif électronique pliable que dans l'état déplié du dispositif électronique pliable ;
la détermination (907) si le changement d'état du dispositif électronique pliable satisfait à une première condition désignée ;
l'exécution (909) d'une fonction de mise en sourdine pour traiter un signal audio introduit dans un microphone (303), sur la base de la détermination que le changement d'état du dispositif électronique pliable satisfait à la première condition désignée ;
le traitement (911) du signal audio, sur la base de la fonction de mise en sourdine pour empêcher le signal audio d'être transmis à un dispositif électronique externe connecté au dispositif électronique pliable par l'intermédiaire d'un circuit de communication ;
la détermination (913) si le changement d'état du dispositif électronique pliable satisfait à une deuxième condition désignée ; et
le traitement (915) d'une première opération d'arrêt d'une connexion d'appel ou d'une deuxième opération de maintien de la connexion d'appel et de libération de la fonction de mise en sourdine selon une configuration du dispositif électronique pliable, sur la base de la détermination que le changement d'état du dispositif électronique pliable satisfait à la deuxième condition désignée,
dans lequel la première opération est traitée sur la base d'une première configuration du dispositif électronique pliable dans laquelle une fonction d'arrêt automatique est configurée pour être activée, et la deuxième opération est traitée sur la base d'une deuxième configuration du dispositif électronique pliable dans laquelle la fonction d'arrêt automatique est configurée pour être inactivée.
